# EUROPÄISCHE PATENTSCHRIFT

(11) **EP 3 408 528 B1**
(45) Veröffentlichungstag und Bekanntmachung des Hinweises auf die Patenterteilung: **27.11.2019**
(21) Anmeldenummer: 17702296.9
(22) Anmeldetag: 17.01.2017
(51) Int. Cl.: B01F 5/06, B01F 3/08, F02M 25/03, F02M 43/04, F02M 25/022

(54) **EMULGIERSYSTEM UND EMULGIERVERFAHREN**
EMULSIFYING SYSTEM AND EMULSIFYING METHOD
SYSTÈME D'ÉMULSIFICATION ET PROCÉDÉ D'ÉMULSIFICATION

(30) Priorität: 27.01.2016 DE 102016000761
(43) Veröffentlichungstag der Anmeldung: 05.12.2018
(73) Patentinhaber: Taniel, Roman, 23820 Pronstorf (DE)
(72) Erfinder: Taniel, Roman, 23820 Pronstorf (DE)
(74) Vertreter: Von Rohr Patentanwälte Partnerschaft mbB
(86) Internationale Anmeldenummer: PCT/EP2017/025010
(87) Internationale Veröffentlichungsnummer: WO 2017/129375

(56) Entgegenhaltungen:
- EP-A1- 2 495 051
- EP-A1- 2 650 522
- CH-A- 364 492
- DE-A1- 3 928 611
- DE-C1- 4 435 823
- DE-C1- 19 650 559
- GB-A- 2 322 411

## Beschreibung

Die vorliegende Erfindung betrifft ein Emulgiersystem gemäß dem Oberbegriff des Anspruchs 1, ein Einspritzsystem gemäß dem Oberbegriff des Anspruchs 10 sowie ein Emulgierverfahren gemäß dem Oberbegriff des Anspruchs 11.

Die dieselmotorische Verbrennung ist dadurch gekennzeichnet, dass ein selbstzündungswilliger Kraftstoff bzw. Diesel unter sehr hohem Druck durch eine Einspritzdüse in eine im Kolben angeordnete Brennraummulde eingespritzt wird. Nach der Zerstäubung und Verdampfung des Kraftstoffes in der durch die Verdichtung auf hohe Temperaturen erhitzten Verbrennungsluft, findet eine Vermischung der bereits verdampften Kraftstoffteile mit der Verbrennungsluft statt. Diese Gemischbildung wird zum einen durch eine Verteilung des Kraftstoffes mittels 6- bis 8-Loch-Einspritzdüsen, zum anderen durch einen in den Einlasskanälen generierten Luftdrall erreicht.

Anschließend findet die chemische Aufbereitung des Kraftstoff-Luftgemisches durch Crackvorgänge der relativ langen Kraftstoffmoleküle sowie die Bildung von aktiven Radikalen statt. Ist die Konzentration aktiver Radikale ausreichend hoch, beginnt die Selbstzündung des Kraftstoff-Luftgemisches in Form einer Kettenreaktion.

Die für die physikalischen und chemischen Gemischbildungsvorgänge erforderliche Zeit wird als Zündverzugszeit bezeichnet.

Aufgrund der durch die direkte Einspritzung des Kraftstoffes und der damit kurzen für die Gemischbildung zur Verfügung stehenden Zeit läuft die weitere Verbrennung in einem Kraftstoff-Luftgemisch mit örtlich inhomogener Kraftstoffverteilung ab. Die Entflammungsphase dieses "inhomogenen" Kraftstoff-Luftgemisches ist durch das Auftreten von "Zündkeimen" in bereits zündfähigen Gemischbereichen gekennzeichnet.

Im weiteren Verbrennungsablauf reagieren zunächst die zu Beginn der Kraftstoffeinspritzung in die komprimierte heiße Verbrennungsluft gelangte Kraftstofftröpfchen, für die dadurch eine relativ lange Zeit zur Gemischaufbereitung zur Verfügung steht. Diese auch als Verbrennung von "vorgemischtem" Gemisch bezeichnete Verbrennungsphase ist auf Grund relativ schnell ablaufender Verbrennungsreaktionen durch höhere Verbrennungstemperaturen und damit höhere thermische Stickoxidbildung und geringere Rußbildung gekennzeichnet. Während dieser ersten Verbrennungsphase wird jedoch nur ein durch die Länge der Zündverzugszeit bestimmter Teil des Kraftstoff-Luftgemisches verbrannt.

Die restliche von der geforderten Motorlast abhängige Gemischmenge, die zum Zeitpunkt des Verbrennungsbeginns noch nicht zündfähig ist, wird erst im weiteren Verlauf des Verbrennungsvorganges durch stark ansteigende Gastemperaturen und eine intensive Ladungsbewegung aufbereitet und verbrennt dann zum Teil unter Luftmangel mit relativ geringer Verbrennungsgeschwindigkeit. Diese auch als "diffusionsgesteuerte" Verbrennung bezeichnete Verbrennungsphase ist durch eine bei örtlichem Luftmangel zunächst auftretende Rußbildung und anschließende, nicht vollständige Rußnachoxidation bei gleichzeitig geringerer Bildung von Stickoxid(NOx) gekennzeichnet.

Aus den verschiedenen Phasen des Verbrennungsablaufs und den entsprechenden Mechanismen der Schadstoffbildung ergibt sich ein für die dieselmotorische Verbrennung typischer Zusammenhang zwischen den Stickoxid- und Rußemissionen, der auch als NOx-Partikel trade-off bezeichnet wird. Dieser NOx-Partikel Zusammenhang besagt, dass bei Abstimmung der Motorbetriebsparameter, wie des Einspritzzeitpunktes, auf niedrige NOx-Emissionen gleichzeitig ein Anstieg der Ruß-/Partikelemissionen unvermeidbar ist.

Zur Einhaltung der gesetzlich vorgeschriebenen Schadstoffemissionen von Dieselmotoren werden sowohl innermotorische Maßnahmen als auch Abgasnachbehandlungsverfahren angewendet. Zu den innermotorischen Maßnahmen gehören als wichtigste Maßnahme zur Verbesserung der Kraftstoff-Luftgemischbildung der Einsatz von Hochdruckeinspritzsystemen, die Einspritzdrücke von mehr als 200 MPa ermöglichen. Der dadurch erreichte verbesserte Zerfall des Einspritzstrahls in kleinere Kraftstofftröpfchen führt zu einer verbesserten Vermischung des Kraftstoffes mit der Verbrennungsluft und damit zu weniger überfetteten Gemischzonen und entsprechend deutlich geringeren Ruß- bzw. Partikelemissionen.

Die somit intensivierte Gemischbildung hat auf Grund höherer Verbrennungstemperaturen entsprechend höhere NOx-Emissionen zur Folge, die durch einen vergrößerten Luftüberschuss mittels erhöhter Aufladedrücke sowie optimierte Einspritzmengenverläufe vermieden werden sollen.

Eine weitere Maßnahme besteht in der zunehmend auch bei schweren Nutzfahrzeugmotoren eingesetzten Abgasrückführung (AGR). Allerdings sind der Abgasrückführrate und damit auch der möglichen NOx-Reduzierung auf Grund abnehmenden Sauerstoffgehaltes in der Verbrennungsluft Grenzen durch wieder ansteigende Ruß- bzw. Partikelemissionen gesetzt.

Da die beschriebenen innermotorischen Maßnahmen zur Schadstoffminderung nicht ausreichen, die Abgasgrenzwerte zu unterschreiten, werden bei neu zugelassenen Nutzfahrzeugmotoren, die die Schadstoffklassen Euro 5 und Euro 6 erfüllen müssen, sogenannte DeNOx-Katalysatorsysteme mit Harnstoff als Reduzierungsmittel und vereinzelt für den Einsatz in Personenkraftwagen mit Dieselmotoren bekannte Partikelfiltersysteme eingesetzt.

Um die Emissionsziele zu erreichen, ist das Rohemissionsverhalten des Dieselmotors an die verwendeten Abgasnachbehandlungssysteme anzupassen. So wird bei typischen Euro 5 Dieselmotoren die Partikelemission durch flexibel abstimmbare Common-Rail (CR-) Einspritzsysteme mit 160 bis 180 MPa Einspritzdruck auf die entsprechenden Grenzwerte reduziert, während die Stickoxidemission meist durch den Einsatz eines harnstoffbasierten DeNOx-Systems ausreichend reduziert. Teilweise wird die NOx-Emission auch durch eine Kombination von Abgasrückführung und nachgeschaltetem DeNOx-System reduziert.

Welche wirtschaftlich vertretbare Verfahrenskombination angewendet wird, hängt im Wesentlichen von der Rohemission eines Dieselmotors ab. Bei Dieselmotoren der Emissionsstufe Euro 6 sind die Anwendung weiter optimierter Einspritzsysteme mit Einspritzdrücken von 200 MPa und mehr zur weiteren Absenkung der Partikelemissionen sowie effizienterer AGR-DeNOx-Systemkombinationen erforderlich. Insbesondere ist der Einsatz von AGR-Systemen mit deutlich höheren AGR-Raten sowie von DeNOx-Systemen mit NOx-Konvertierungsraten von bis zu 90 Prozent erforderlich.

Sind die NOx-Emissionsgrenzwerte durch den beschriebenen Einsatz von AGR und DeNOx-Systemen nicht einzuhalten, ist die zusätzliche Anwendung eines Partikelfiltersystems mit entsprechend angepasster Abstimmung von AGR- und DeNOx-System unvermeidbar.

Somit ist festzustellen, dass die für schwere Nutzfahrzeugmotoren gültige Emissionsstufe Euro 5 und besonders Euro 6 nur mit erheblichem technischem und wirtschaftlichem Mehraufwand erreicht werden kann. Bei allen Verfahrenskombinationen zur Reduzierung der NOx- und Partikelemissionen ist durch katalysatorbedingt erhöhten Abgasgegendruck und gegebenenfalls notwendige Anpassungsmaßnahmen des Verbrennungsablaufs mit einer Verschlechterung des Kraftstoffverbrauchsverhaltens zu rechnen. Hierbei wird jedoch grundsätzlich eine möglichst niedrige NOx-Partikel-Rohemission des Motors angestrebt, da hierdurch der Aufwand auf der Abgasnachbehandlungsseite geringer ausfällt.

Neben innermotorischen Maßnahmen sowie dem Einsatz von Abgasnachbehandlungssystemen stellen prinzipiell auch in der Zusammensetzung modifizierte Kraftstoffe eine interessante Möglichkeit zur Senkung der Schadstoffemissionen bei Dieselmotoren dar. Hierbei besteht schon seit langem ein besonderes Interesse an der Zumischung von Wasser und anderen Komponenten, wie Alkohole, zu Dieselkraftstoff, da sich auf diese Weise der Stickoxid-Ruß-Trade-off günstig beeinflussen lässt (vgl. Bach, F., Lüft, M., Bartosch, S., Spicher, U.: Einfluss von Diesel-Ethanol-Wasser-Emulsionskraftstoffen auf die Dieselmotor-Emissionen. MTZ 05/2011, S. 408-414).

Bei der Anwendung von Wasser-in-Dieselkraftstoff-Emulsion oder kurz Wasser-Diesel-Emulsion wird anstelle des reinen Dieselkraftstoffs entweder eine fertig zubereitete Wasser-Diesel-Emulsion unter Verwendung eines Emulgierzusatzes oder eine an Bord eines Fahrzeuges erzeugte Emulsion durch das vorhandene Einspritzsystem in den Brennraum eingespritzt. Die Herstellung der Emulsion im Fahrzeug hat den Vorteil, dass der Wasseranteil im Mischkraftstoff unter Berücksichtigung der verbrennungstechnischen Grenzen im Hinblick auf eine möglichst hohe Schadstoffminderung relativ frei gewählt werden kann.

Wasser-Diesel-Emulsionen können als disperse Mehrphasensysteme aus mindestens zwei in einer Mischung unlöslichen Flüssigkeiten angesehen werden, bei denen Wasser als innere, disperse Phase angesehen wird.

Der Dieselkraftstoff stellt entsprechend die äußere Phase, das sog. Dispergiermittel, dar.

Wasser-Diesel-Emulsionen sind thermodynamisch nicht stabil und trennen sich nach relativ kurzer Standzeit. Durch den Einsatz von Emulgierhilfsstoffen, sog. Emulgatoren, ist es grundsätzlich möglich eine Wasser-Diesel-Emulsion in eine thermodynamisch stabile Form zu überführen.

Ein für die Eignung einer Emulsion als Kraftstoff für Dieselmotoren wichtiges Kriterium stellt dabei die möglichst feine Verteilung der Wassertropfen im Dieselkraftstoff dar.

Für den mobilen Einsatz sind im Fahrzeug unter Verwendung eines Emulgators oder, wenn kein Emulgator eingesetzt wird, einer entsprechenden Mischeinrichtung erzeugte Emulsionen geeignet.

Der Einsatz außerhalb eines Fahrzeugs erzeugter Emulsionen, die z.B. an Tankstellen zur Verfügung stehen, weisen eine konstante Zusammensetzung auf, die nicht an die Anforderungen des Motorbetriebs angepasst ist und somit nicht das mögliche Potenzial hinsichtlich Emissions- und Verbrauchsminderung ermöglicht.

Die Wirkung von Wasser-Diesel-Emulsionen besteht zum Einen in einer durch die bei der Wasserverdampfung auftretenden Temperaturabsenkung und zum Anderen in verminderten Verbrennungstemperaturen durch den erhöhten Inertgasanteil in Form von Wasserdampf. Beides führt zu einer Verlängerung des physikalischen Zündverzuges, der zu einer gleichmäßigeren (homogeneren) Verteilung des Kraftstoffs im Brennraum und damit zu einem größeren Anteil der "vorgemischten" Verbrennung führt.

Die hierdurch verstärkte Homogenisierung des Gemisches in Verbindung mit den in der Emulsion fein verteilten Wassertröpfchen führt zu einer Verminderung sehr kraftstoffreicher und damit überfetteter Gemischbereiche, die während des Verbrennungsvorganges wesentlich für die Rußentstehung verantwortlich sind.

Die Verminderung der Stickoxidemissionen kann auf eine deutliche Flammentemperaturabsenkung sowohl durch die hohe Verdampfungsenthalpie des Wassers als auch durch die wasserbedingte geringere lokale spezifische Wärmefreisetzung in der Verbrennungszone zurückgeführt werden (vgl. Pittermann, R., Hinz, M., Kauert, L.: Einfluss von Abgasrückführung und Kraftstoff-Wasser-Emulsion auf Verbrennungsablauf und Schadstoffbildung im Dieselmotor. MTZ 60(1999)12, S. 812-818).

Die zur Absenkung der NOx-Emissionen vermehrt eingesetzte Abgasrückführung (AGR) bewirkt ebenfalls verminderte Flammentemperaturen entsprechend dem erhöhten Inertgasanteil. Allerdings treten bei höheren AGR-Raten stark erhöhte Rußemissionen auf, die in der Kombination mit Wasser-Diesel-Emulsionskraftstoffen vermieden werden können. Somit erhöht der Einsatz von Wasser-Diesel-Emulsionskraftstoffen die AGR-Toleranz und damit das Potenzial zur NOx- und Rußminderung.

Eine weitere Voraussetzung für den optimalen Einsatz eines Emulsionskraftstoffes besteht in der Notwendigkeit einer Anpassung des Wasseranteils in der Emulsion an die unterschiedlichen Motorbetriebszustände, das Abschalten und das Anlassen des Motors auch nach längerem Stillstand.

In der Startphase des Dieselmotors sind ein sicheres und schnelles Anspringen sowie eine schnelle Erwärmung des Motors nur im reinen Dieselkraftstoffbetrieb zu erreichen, da bereits nach einigen Arbeitstakten eine stabile Verbrennung erreicht wird. Bei Verwendung einer Wasser-Diesel-Emulsion auch in der Startphase erhöht sich, durch die verschlechterte Selbstzündungsfähigkeit der Emulsion, die Anzahl der Arbeitstakte ohne Verbrennung mit entsprechend erhöhten Emissionen an unverbranntem Kraftstoff. In der Warmlaufphase kann, entsprechend der Erwärmung des Motors, der Wasseranteil in der Emulsion erhöht werden.

Bei weitgehend stationärem Motorbetrieb und hoher Leistung kann, wegen der höheren Brennraumtemperaturen ein größerer Anteil Wasser in der Emulsion enthalten sein, um so einen möglichst wirkungsgradoptimalen Verbrennungsablauf bei gleichzeitig hoher Absenkung der NOx- und Partikelemissionen zu erreichen.

Bei niedrigeren Lastzuständen und entsprechend geringeren Brennraumtemperaturen ist eine Reduzierung des Wasseranteils in der Emulsion erforderlich, um eine zu starke Abkühlung der Flammenbereiche mit erhöhten Emissionen an unverbranntem Kraftstoff zu vermeiden. Der weitgehend stationäre Motorbetrieb mit nur relativ langsamen Änderungen von Last und Motordrehzahl erfordert keine dynamikfähigen Emulgieranlagen.

Grundsätzlich ist die Nutzung des vollen Potenzials einer Wasser-Diesel-Emulsion zur NOx- und Rußminderung nur dann möglich, wenn der Wasseranteil betriebspunktabhängig möglichst nahe an der jeweiligen verbrennungstechnischen Grenze liegt. Für typischerweise im Fahrzeugbereich vorkommenden dynamischen Betrieb bedeutet das, dass eine sehr schnelle Anpassung des Wasseranteils an die momentanen Brennraumtemperaturen und den für die Verbrennung verfügbaren Sauerstoffgehalt bei Anwendung der Abgasrückführung unbedingt erforderlich ist.

Je schneller die Anpassung des Wasseranteils an den momentanen Betriebszustand des Motors erfolgt, umso höher fällt die Emissionsminderung aus. Dieses ist umso mehr wichtig, da die Ermittlung des Emissionsverhaltens von Dieselmotoren für Nutzfahrzeuge und mobile Arbeitsmaschinen unter Anwendung transienter Abgastestzyklen erfolgt.

Aus DE 10 2009 048 223 A1 ist ein Verfahren zur Herstellung einer Mikroemulsion bekannt, bei dem Dieselkraftstoff und Wasser mittels zweier Common-Rail Einspritzsysteme getrennt und unter hohem Druck einer zwischen den Hochdruckspeichern für Diesel und Wasser sowie der Einspritzdüse angeordneten Mischkammer zugeführt werden. In dieser Mischkammer erfolgt durch den bereits im Dieselkraftstoff enthaltenen Emulgator die Bildung einer Mikroemulsion. Dieses Verfahren erfordert den Einsatz spezieller Emulgatoren, die eine sehr schnelle Wasser-Diesel-Emulsionsbildung ermöglichen.

Aus DE 10 2005 044 046 B4 ist eine Vorrichtung bekannt, die mittels eines mechanisch oder hydraulisch angetriebenen Stufenkolbens Wasser und Dieselkraftstoff mit einem Druck von bis zu 200 MPa einer Gegenstrom-Hochdruckemulgierdüse zuführt. Die erzeugte Wasser-Diesel-Emulsion wird in mehreren federbelasteten Zwischenspeichern, die auch eine Dämpferfunktion haben, vorgehalten und nach Bedarf über ein Verteilrohr zu den Injektoren geleitet. Prinzipiell stellt diese Vorrichtung somit eine kombinierte Emulgier- und Hochdruckpumpe, vergleichbar mit der Dieselhochdruckpumpe eines üblichen Common-Rail Einspritzsystems dar. Die relativ großen Kraftstoffspeichervolumina in der Hochdruckpumpe sowie in der Verteilerleitung zu den Injektoren lassen eine schnelle Anpassung der Emulsionszusammensetzung innerhalb weniger Arbeitstakte nicht zu.

Aus DE 44 12 965 A1 ist ein Verfahren und eine Vorrichtung zum Steuern der Dieselkraftstoff- und Wasser-Diesel-Emulsionszufuhr bei Reiheneinspritzpumpen bekannt, bei dem abhängig vom Lastzustand des Motors unterschiedlich zusammengesetzte Emulsionen in einer Mischanlage erzeugt und dann der Einspritzpumpe zugeführt werden oder aber ein ausschließlicher Dieselbetrieb besteht. Die Auswirkung dieser zwischen der Emulsionsbildung und der Bereitstellung am Injektor bestehenden Totzeit auf das Betriebs- und Emissionsverhalten hängt im Wesentlichen von dem Systemvolumen im Bereich der Emulsionserzeugung und dem auszutauschenden Kraftstoffvolumen im Hochdruckbereich des Einspritzsystems ab. In jedem Fall dürfte die Anpassung an dynamische Betriebsbedingungen nur relativ langsam erfolgen.

Die GB 2 322 411 A betrifft ein Kraftstoffinjektionsventil für Verbrennungsmotoren. Das Ventil weist neben einer Versorgungsleitung für Kraftstoff eine zweite Versorgungsleitung für ein zweites Injektionsmedium, z. B. Wasser, auf. In einem Ringkanal zwischen einer Druckkammer und einem Ventilsitz kann eine Kraftstoff-Wasser-Emulsion gebildet werden.

Die EP 2 495 051 A1 offenbart eine Mischdüse mit mehreren Zuleitungen für Kraftstoff, Wasser und Luft. Die Luft kann mit Kraftstoff zu einem Nebel vermischt werden, der anschließend mit Wasser vermischt wird. Diese Mischung aus Wasser, Kraftstoff und Luft trifft dann auf ein Aufprallteil, welches aus der Mischung einen Nebel mit feineren Partikeln erzeugt.

Der vorliegenden Erfindung liegt die Aufgabe zugrunde, ein verbessertes System und ein verbessertes Verfahren zur Herstellung einer Wasser-Kraftstoff-Emulsion anzugeben, vorzugsweise wobei eine energieeffiziente Herstellung einer insbesondere homogenen Wasser-Kraftstoff-Emulsion mit variabler Zusammensetzung und/oder schnellere Anpassungsfähigkeit an dynamische Betriebsbedingungen ermöglicht oder unterstützt wird.

Die obige Aufgabe wird durch ein Emulgiersystem gemäß Anspruch 1, ein Einspritzsystem gemäß Anspruch 10 oder ein Emulgierverfahren gemäß Anspruch 11 gelöst. Vorteilhafte Weiterbildungen sind Gegenstand der Unteransprüche.

Das vorschlagsgemäße Emulgiersystem weist vorzugsweise eine Emulgiervorrichtung zur Herstellung einer Wasser-Kraftstoff-Emulsion und einen Injektor bzw. eine Einspritzdüse zum Einspritzen der Wasser-Kraftstoff-Emulsion in einem zugeordneten Brennraum eines Verbrennungsmotors auf.

Ein Aspekt der vorliegenden Erfindung liegt darin, dass die Emulgiervorrichtung - vorzugsweise vollständig - in den Injektor integriert bzw. innerhalb des Injektors angeordnet ist. Auf diese Weise wird eine besonders kompakte Bauweise sowie eine schnelle Anpassungsfähigkeit an dynamische Betriebsbedingungen ermöglicht oder unterstützt. Insbesondere ermöglicht eine derartige Konstruktionsweise eine Minimierung des Volumens der im Einspritzsystem verbleibenden Wasser-Kraftstoff-Emulsion bzw. der Zeit bis zur Einbringung der angepassten bzw. für den Betriebspunkt optimierten Wasser-Kraftstoff-Emulsion.

Vorzugsweise weist das Emulgiersystem einen Kraftstoffeinlass und einen vom Kraftstoffeinlass separaten Wassereinlass auf bzw. ist Kraftstoff und Wasser dem Emulgiersystem, insbesondere dem Injektor, separat zuführbar.

Die Emulgiervorrichtung ist vorzugsweise näher an einem Auslass für die Wasser-Kraftstoff-Emulsion des Injektors angeordnet als am Kraftstoffeinlass, Wassereinlass und/oder einem dem Auslass gegenüberliegenden Ende des Injektors. In vorteilhafter Weise wird so das im Injektor verbleibende Volumen der Wasser-Kraftstoff-Emulsion reduziert.

Die Emulgiervorrichtung ist vorzugsweise mehrstufig, insbesondere zweistufig, ausgebildet. Insbesondere weist die Emulgiervorrichtung eine Voremulgierstufe und eine Feinemulgierstufe auf, insbesondere wobei sowohl die Voremulgierstufe als auch die Feinemulgierstufe innerhalb des Injektors angeordnet sind.

Die Emulgiervorrichtung weist vorzugsweise einen statischen Mischer zum Mischen des Kraftstoffs mit Wasser auf bzw. bildet einen solchen.

Besonders bevorzugt sind/ist die Voremulgierstufe und/oder Feinemulgierstufe statisch bzw. zumindest im Wesentlichen unbeweglich bzw. weist die Emulgiervorrichtung keine beweglichen Bauteile auf. Dies ermöglicht eine kompakte, wartungsarme, stabile und kostengünstige Bauweise des Emulgiersystems.

Die Emulgiervorrichtung, insbesondere der Mischer bzw. die Voremulgierstufe, ist vorzugsweise dazu ausgebildet, Wasser seitlich bzw. quer zur Hauptströmungsrichtung des Kraftstoffes dem Kraftstoff zuzuführen. Dies ist einem effizienten Mischen zuträglich.

Unter dem Begriff "Emulsion" ist vorzugsweise ein Gemisch mindestens zweier Fluide zu verstehen. Vorzugsweise weist eine Emulsion ein erstes Fluid, wie Kraftstoff, als innere Phase und ein zweites Fluid, wie Wasser, als äußere Phase auf. Eine Wasser-Kraftstoff-Emulsion im Sinne der vorliegenden Erfindung ist folglich ein Gemisch aus Wasser und Kraftstoff, wie Diesel oder Benzin, insbesondere wobei die mittlere Tröpfchengröße bzw. der mittlere Tröpfchendurchmesser der Wassertröpfchen weniger als 10 µm, besonders bevorzugt weniger als 5 µm, insbesondere weniger als 1 µm, beträgt. Eine Wasser-Kraftstoff-Emulsion kann jedoch auch aus anderen Fluiden bestehen und/oder andere Fluide oder Stoffe, beispielsweise einen Emulgator, aufweisen. Insbesondere kann zusätzlich oder alternativ zum Wasser ein Alkohol verwendet werden.

Unter dem Begriff "Einspritzdüse" bzw. "Injektor" ist vorzugsweise eine Einrichtung zu verstehen, die dazu ausgebildet ist, Kraftstoff bzw. eine Wasser-Kraftstoff-Emulsion zu verteilen bzw. zu zerstäuben, zu vernebeln bzw. auf diese oder sonstige Weise mit der Wasser-Kraftstoff-Emulsion ein Aerosol zu bilden und/oder in einen zugeordneten Brennraum zu führen.

Eine Einspritzdüse bzw. ein Injektor im Sinne der vorliegenden Erfindung weist vorzugsweise einen Fluidanschluss für Kraftstoff bzw. eine Wasser-Kraftstoff-Emulsion, einen elektrischen Anschluss zu einem Steuergerät, eine Druckfeder und/oder einen Düsenkörper und/oder eine Düsennadel auf. Optional weist eine Einspritzdüse einen vorzugsweise elektrischen (Piezo-)Aktuator zum Betätigen der Düsennadel auf. Vorzugsweise ist die Düsennadel in Abhängigkeit vom Kraftstoff- bzw. Emulsionsdruck öffenbar, vorzugsweise derart, dass der Kraftstoff bzw. die Emulsion in einen Brennraum eingespritzt wird.

Die Begriffe "Einspritzdüse" und "Injektor" sind vorzugsweise Synonyme bzw. werden vorliegend synonym verwendet. Insbesondere kann der Begriff "Einspritzdüse" durch den Begriff "Injektor" ersetzt werden oder umgekehrt.

Besonders bevorzugt bilden die Emulgiervorrichtung und die Einspritzdüse bzw. der Injektor zusammen eine zumindest im Wesentlichen feste bzw. starre und/oder einstückige Baugruppe bzw. Baueinheit. Auf diese Weise wird der Abstand zwischen der Emulgiervorrichtung und der Einspritzdüse minimiert, so dass etwaige Strömungsverluste reduziert werden, eine dynamische Anpassung des Wasser-Kraftstoff-Verhältnisses ermöglicht und/oder einer Entmischung der Emulsion entgegengewirkt wird. Durch die kompakte Bauweise bzw. das geringere Volumen von vorzugsweise weniger als 20 ml, insbesondere weniger als 10 ml, des Emulgiersystems kann ferner die zum Spülen des Emulgiersystems benötigte Kraftstoffmenge reduziert bzw. auf eine Spülung des Emulgiersystems verzichtet werden.

Bei dem vorschlagsgemäßen Emulgierverfahren zur Herstellung einer Wasser-Kraftstoff-Emulsion werden Wasser und Kraftstoff - vorzugsweise getrennt von einander und/oder unter Druck - einem Injektor zur Erzeugung der Wasser-Kraftstoff-Emulsion zugeführt. Auf diese Weise werden entsprechende Vorteile realisiert.

Gemäß einem weiteren, auch unabhängig realisierbaren Aspekt der vorliegenden Erfindung werden Kraftstoff und Wasser mittels einer in einem Injektor integrierten - vorzugsweise statischen - Emulgiervorrichtung emulgiert, vorzugsweise derart, dass innerhalb des Injektors bzw. brennraumnah eine Wasser-Kraftstoff-Emulsion hergestellt wird. Auf diese Weise werden entsprechende Vorteile realisiert.

Die oben genannten Aspekte und Merkmale der vorliegenden Erfindung sowie die sich aus den Ansprüchen und der nachfolgenden Beschreibung ergebenden Aspekte und Merkmale der vorliegenden Erfindung können grundsätzlich unabhängig voneinander, aber auch in beliebiger Kombination bzw. Reihenfolge realisiert werden.

Weitere Aspekte, Vorteile, Merkmale und Eigenschaften der vorliegenden Erfindung ergeben sich aus den Ansprüchen und der nachfolgenden Beschreibung bevorzugter Ausführungsformen anhand der Zeichnung. Es zeigt:
- Fig. 1: eine schematische Darstellung eines vorschlagsgemäßen Verbrennungsmotors mit einem vorschlagsgemäßen Einspritzsystem gemäß einer ersten Ausführungsform;
- Fig. 2: einen schematischen Schnitt eines vorschlagsgemäßen Emulgiersystems mit einer vorschlagsgemäßen Emulgiervorrichtung;
- Fig. 3: einen schematischen Schnitt des Emulgiersystems im Bereich der Emulgiervorrichtung gemäß Fig. 2;
- Fig. 4: eine perspektivische Ansicht der Emulgiervorrichtung bzw. einer Voremulgierstufe dieser gemäß Fig. 2;
- Fig. 5: eine perspektivische Ansicht einer vorschlagsgemäßen Emulgiervorrichtung bzw. einer Voremulgierstufe einer vorschlagsgemäßen Emulgiervorrichtung gemäß einer weiteren Ausführungsform;
- Fig. 6: einen schematischen Schnitt eines vorschlagsgemäßen Emulgiersystems im Bereich einer vorschlagsgemäßen Emulgiervorrichtung gemäß einer weiteren Ausführungsform;
- Fig. 7: eine perspektivische Ansicht einer Düsennadel des Emulgiersystems gemäß Fig. 6;
- Fig. 8: eine perspektivische Ansicht einer Düsennadel gemäß einer weiteren Ausführungsform;
- Fig. 9: eine perspektivische Ansicht eines vorschlagsgemäßen Emulgiersystems gemäß einer weiteren Ausführungsform;
- Fig. 10: eine perspektivische Ansicht einer vorschlaggemäßen Emulgiervorrichtung gemäß einer weiteren Ausführungsform; und
- Fig. 11: einen schematischen Schnitt der Emulgiervorrichtung gemäß Fig. 10.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften und Vorteile erreicht werden können, auch wenn von einer wiederholten Beschreibung abgesehen wird.

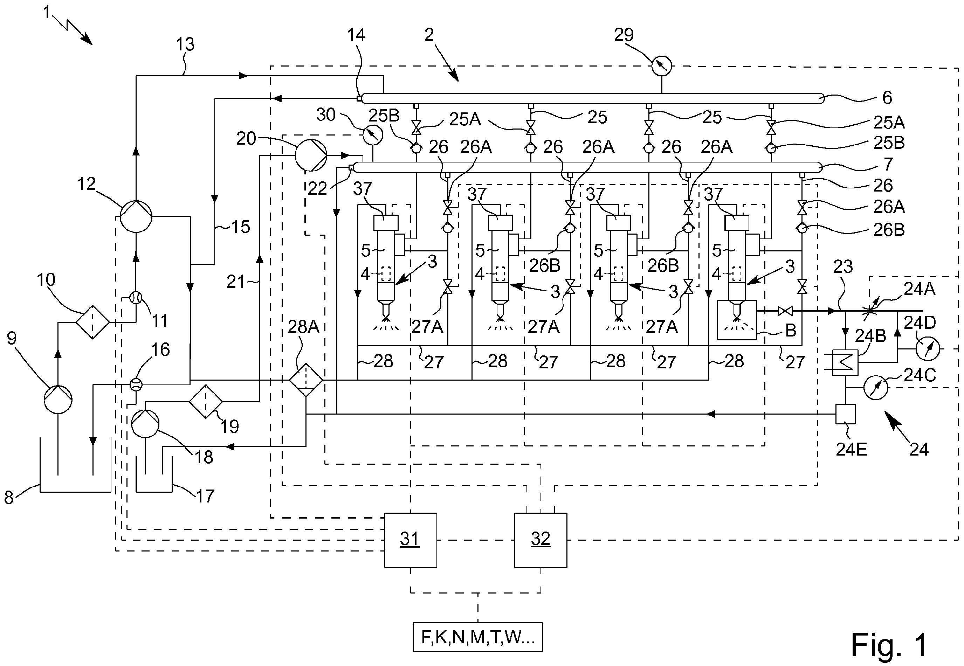

Fig. 1 zeigt in einer schematischen Darstellung einen vorschlagsgemäßen Verbrennungsmotor 1 mit einem vorschlagsgemäßen Einspritzsystem 2.

Der Verbrennungsmotor 1 bzw. das Einspritzsystem 2 weist vorzugsweise mindestens ein Emulgiersystem 3 und mindestens einen Brennraum B auf.

Das Einspritzsystem 2 bzw. Emulgiersystem 3 ist vorzugsweise dazu ausgebildet, Kraftstoff und/oder Wasser bzw. eine Wasser-Kraftstoff-Emulsion in einen oder mehrere Brennräume B des Verbrennungsmotors 1, vorzugsweise unter Druck, insbesondere von mehr als 50 MPa oder 100 MPa, einzuspritzen.

Das Emulgiersystem 3 ist vorzugsweise dazu ausgebildet, Wasser und Kraftstoff, insbesondere Diesel oder Benzin, miteinander zu mischen bzw. emulgieren und/oder aus Wasser und Kraftstoff, insbesondere Diesel oder Benzin, eine Wasser-Kraftstoff-Emulsion bzw. Wasser-Diesel-Emulsion zu erzeugen bzw. herzustellen. Es können jedoch grundsätzlich auch andere Fluide mittels des Emulgiersystems 3 miteinander emulgiert werden.

Bei der dargestellten Ausführungsform weist der Verbrennungsmotor 1 bzw. das Einspritzsystem 2 mehrere, hier vier, Emulgiersysteme 3 auf, vorzugsweise wobei jeweils ein Emulgiersystem 3 einem Zylinder bzw. Brennraum B des Verbrennungsmotors 1 zugeordnet oder zuordenbar und/oder mit einem Zylinder bzw. Brennraum B des Verbrennungsmotors 1 fluidisch verbunden oder verbindbar ist. In Fig. 1 ist jedoch lediglich ein Brennraum B angedeutet.

Der Verbrennungsmotor 1 bzw. das Einspritzsystem 2 bzw. das Emulgiersystem 3 weist vorzugsweise eine Emulgiervorrichtung 4 und/oder eine Einspritzdüse bzw. einen Injektor 5 auf.

Der Verbrennungsmotor 1 bzw. das Einspritzsystem 2 weist vorzugsweise einen Kraftstoff-Druckspeicher bzw. ein Kraftstoff-Rail bzw. eine Sammelschiene 6 und/oder einen Wasser-Druckspeicher bzw. ein Wasser-Rail 7 auf, vorzugsweise wobei mehrere Emulgiersysteme 3, Emulgiervorrichtungen 4 bzw. Injektoren 5 - vorzugsweise jeweils einzeln - fluidisch mit dem Kraftstoff-Druckspeicher 6 und/oder dem Wasser-Druckspeicher 7 verbunden oder verbindbar sind, vorzugsweise jeweils über eine entsprechende Hochdruck- oder Einspritzleitung, wie im Folgenden noch näher erläutert wird.

Im Folgenden wird zunächst der schematische Aufbau des Verbrennungsmotors 1 bzw. des Einspritzsystems 2 anhand von Fig. 1 beschrieben, bevor das vorschlagsgemäße Emulgiersystem 3 bzw. die Emulgiervorrichtung 4 bzw. der Injektor 5 näher erläutert wird.

Der Verbrennungsmotor 1 bzw. das Einspritzsystem 2 weist vorzugsweise einen Kraftstofftank 8, eine Kraftstoffvordruckpumpe 9, einen Kraftstofffilter 10, einen Kraftstoffzähler 11, insbesondere einen Kraftstoffvolumenzähler, und/oder eine Kraftstoffhochdruckpumpe 12 auf, vorzugsweise in einer (gemeinsamen) Kraftstoffzuleitung 13.

Vorzugsweise weist bzw. weisen der Verbrennungsmotor 1 bzw. das Einspritzsystem 2, insbesondere die Kraftstoffhochdruckpumpe 12 und/oder der Kraftstoff-Druckspeicher 6, ein Kraftstoffdruckregelventil 14 und/oder eine Kraftstoffrückleitung 15 auf, vorzugsweise wobei der Kraftstoffdruck K im Kraftstoff-Druckspeicher 6 mittels des Kraftstoffdruckregelventils 14 regelbar bzw. steuerbar, insbesondere reduzierbar, ist.

Die Kraftstoffrückleitung 15 verbindet vorzugsweise den Kraftstoff-Druckspeicher 6, die Kraftstoffvordruckpumpe 9 und/oder Kraftstoffhochdruckpumpe 12 mit dem Kraftstofftank 8, vorzugsweise wobei die Kraftstoffrückleitung 15 einen (weiteren) Kraftstoffzähler 16 aufweist.

Vorzugsweise ist das Einspritzsystem 2 bzw. das Emulgiersystem 3 bzw. die Emulgiervorrichtung 4 über die Kraftstoffzuleitung 13 fluidisch mit dem Kraftstofftank 8 verbunden.

Insbesondere ist das Emulgiersystem 3 bzw. die Emulgiervorrichtung 4 bzw. der Injektor 5 mit Kraftstoff, insbesondere Diesel oder Benzin, und einer weiteren Komponente, hier Wasser, versorgbar, vorzugsweise um eine Wasser-Kraftstoff-Emulsion herzustellen.

Der Verbrennungsmotor 1 bzw. das Einspritzsystem 2 weist vorzugsweise einen Wassertank 17, eine Wasservordruckpumpe 18, einen Wasserfilter 19 und/oder eine Wasserhochdruckpumpe bzw. Dosiereinheit 20 auf, vorzugsweise in einer (gemeinsamen) Wasserzuleitung 21.

Vorzugsweise ist das Emulgiersystem 3 bzw. die Emulgiervorrichtung 4 über die Wasserzuleitung 21 mit dem Wassertank 17 verbunden und/oder mit Wasser versorgbar.

Vorzugsweise weist bzw. weisen der Verbrennungsmotor 1 bzw. das Einspritzsystem 2, insbesondere die Wasserhochdruckpumpe 20 und/oder der Wasser-Druckspeicher 7, ein Wasserdruckregelventil 22 auf, vorzugsweise wobei der Wasserdruck W im Wasser-Druckspeicher 7 mittels des Wasserdruckregelventils 22 regelbar bzw. steuerbar, insbesondere reduzierbar, ist.

Vorzugsweise weist der Verbrennungsmotor 1 eine Abgasleitung 23 auf, vorzugsweise wobei Abgas über die Abgasleitung 23 an die Umgebung und/oder eine optionale Abgasaufbereitung abgebbar ist.

Vorzugsweise ist die Abgasleitung 23 an die Brennräume B angeschlossen bzw. ist Abgas über die Abgasleitung 23 aus den Brennräumen B abführbar, insbesondere über ein oder mehrere zugeordnete Ventile (nicht dargestellt).

Optional weist der Verbrennungsmotor 1 einen geschlossenen oder schließbaren Wasserkreislauf auf und/oder ist Wasser aus dem Abgas zumindest teilweise rückgewinnbar.

Vorzugsweise weist der Verbrennungsmotor 1 ein Rückgewinnungssystem 24 auf, vorzugsweise wobei das Rückgewinnungssystem 24 dazu ausgebildet ist, Wasser aus dem Abgas - zumindest teilweise - zurückzugewinnen bzw. abzuscheiden, aufzubereiten und/oder dem Wassertank 17 zuzuführen.

Insbesondere ist das Rückgewinnungssystem 24 dazu ausgebildet, Wasser aus dem Abgas abzuscheiden, zu filtrieren und/oder neutralisieren bzw. den PH-Wert des Wasser anzupassen.

Das Rückgewinnungssystem 24 ist vorzugsweise an die Abgasleitung 23 angeschlossen und/oder in diese integriert.

Vorzugsweise verbindet das Rückgewinnungssystem 24 die Abgasleitung 23 mit dem Wassertank 17.

Vorzugsweise weist das Rückgewinnungssystem 24 eine insbesondere steuerbare Drossel 24A, einen insbesondere steuerbaren Kühler 24B, einen Drucksensor 24C, einen Feuchtesensor 24D und/oder eine Wasseraufbereitung 24E auf.

Vorzugsweise ist das Abgas aus der Abgasleitung 23 zumindest temporär und/oder teilweise dem Rückgewinnungssystem 24, insbesondere dem Kühler 24B und/oder der Aufbereitung 24E, zuführbar, vorzugsweise durch Schließen bzw. Ansteuern der Drossel 24A.

Vorzugsweise ist das Abgas mittels des Rückgewinnungssystems 24, insbesondere des Kühlers 24B, kühlbar, vorzugsweise derart, dass Wasser im Abgas zumindest teilweise kondensiert. Insbesondere ist Wasser bzw. das Kondensat aus dem Abgas im Kühler 24B abführbar.

Vorzugsweise ist der Druck des Abgases bzw. des Kondensats und/oder die Feuchte des Abgases mittels des Drucksensors 24C bzw. Feuchtesensors 24D messbar.

Vorzugsweise ist das Kondensat bzw. abgeschiedene Wasser mittels der Aufbereitung 24E filtrierbar und/oder ist der PH-Wert des Kondensats bzw. abgeschiedenen Wassers mittels der Aufbereitung 24E anpassbar bzw. einstellbar, vorzugsweise auf einen Wert von mehr als 2, insbesondere mehr als 3 oder 5, und/oder weniger als 12 oder 10, insbesondere weniger als 9 oder 8.

Der Verbrennungsmotor 1 bzw. das Einspritzsystem 2 weist vorzugsweise eine Hochdruck- bzw. Einspritzleitung für Kraftstoff bzw. Kraftstoffleitung 25 auf, vorzugsweise wobei die Kraftstoffleitung 25 den Kraftstoff-Druckspeicher 6 mit der Emulgiervorrichtung 4 bzw. dem Injektor 5 fluidisch verbindet.

Optional ist in der Kraftstoffleitung 25 ein Steuerventil 25A und/oder Rückschlagventil 25B angeordnet, vorzugsweise wobei die Kraftstoffzufuhr zur Emulgiervorrichtung 4 bzw. zum Injektor 5, insbesondere die Kraftstoffmenge, mittels des Steuerventils 25A steuerbar ist.

Vorzugsweise ist das Rückschlagventil 25B dazu ausgebildet ist, eine Rückströmung des Kraftstoffs und/oder von Wasser von der Emulgiervorrichtung 4 bzw. dem Injektor 5 zum Kraftstoff-Druckspeicher 6 zu verhindern.

Vorzugsweise weist der Verbrennungsmotor 1 bzw. das Einspritzsystem 2 eine Hochdruck- bzw. Einspritzleitung für Wasser bzw. Wasserleitung 26 auf, vorzugsweise wobei die Wasserleitung 26 den Wasser-Druckspeicher 7 mit der Emulgiervorrichtung 4 bzw. dem Injektor 5 fluidisch verbindet.

Vorzugsweise ist in der Wasserleitung 26 ein Steuerventil 26A und/oder Rückschlagventil 26B angeordnet, vorzugsweise wobei die Wasserzufuhr zur Emulgiervorrichtung 4 bzw. zum Injektor 5, insbesondere die Wassermenge, der Zeitpunkt der Wasserzufuhr und/oder die Dauer der Wasserzufuhr, mittels des Steuerventils 26A steuerbar ist bzw. sind.

Vorzugsweise ist das Rückschlagventil 26B dazu ausgebildet ist, eine Rückströmung von Kraftstoff und/oder Wasser von der Emulgiervorrichtung 4 bzw. vom Injektor 5 zum Wasser-Druckspeicher 7 zu verhindern.

Optional weist der Verbrennungsmotor 1 bzw. das Einspritzsystem 2 eine Spülleitung 27 auf, vorzugsweise wobei die Spülleitung 27 die Wasserleitung 26 mit einer Rücklaufleitung 28 und/oder den Kraftstoff-Druckspeicher 6 und/oder die Kraftstoffleitung 25 mit der Wasserleitung 26 fluidisch verbindet.

Vorzugsweise ist die Wasserleitung 26 bzw. die Emulgiervorrichtung 4 bzw. der Injektor 5 zumindest teilweise mittels der Spülleitung 27 mit Kraftstoff spülbar, vorzugsweise derart, dass Rückstände der Wasser-Kraftstoff-Emulsion zumindest teilweise aus der Kraftstoffleitung 25 bzw. Emulgiervorrichtung 4 bzw. den Injektor 5 entfernt werden können.

Vorzugsweise mündet die Spülleitung 27, insbesondere stromabwärts zum Rückschlagventil 26B, in die Wasserleitung 26, wie in Fig. 1 dargestellt.

Vorzugsweise ist in der Spülleitung 27 ein Steuerventil 27A und/oder ein Rückschlagventil (nicht dargestellt) angeordnet, vorzugsweise wobei der Spülvorgang mittels des Steuerventils 27A steuerbar ist und/oder das Rückschlagventil dazu ausgebildet ist, eine Rückströmung von Kraftstoff und/oder Wasser in den Kraftstoff-Druckspeicher 6 zu verhindern.

Vorzugsweise weist der Verbrennungsmotor 1 bzw. das Einspritzsystem 2 eine Rücklaufleitung 28 auf, vorzugsweise wobei die Rücklaufleitung 28 das Emulgiersystem 3 bzw. die Emulgiervorrichtung 4 bzw. den Injektor 5 fluidisch mit dem Kraftstofftank 8 und/oder Wassertank 17 verbindet und/oder Wasser und/oder Kraftstoff über die Rücklaufleitung 28 in den Kraftstofftank 8 bzw. Wassertank 17 zurückströmen kann.

Vorzugsweise ist es mittels der Rücklaufleitung 28 möglich, Kraftstoff bzw. Wasser, der bzw. das zum Steuern des Injektors 5 verwendet wird, aus dem Injektor 5 abzuführen.

Optional ist in der Rücklaufleitung 28 ein Wasserabscheider bzw. Kraftstoffabscheider 28A angeschlossen bzw. integriert und/oder verbindet die Rücklaufleitung 28 das Emulgiersystem 3 bzw. die Emulgiervorrichtung 4 bzw. den Injektor 5 mit einem Wasser- bzw. Kraftstoffabscheider 28A.

Der Wasser- bzw. Kraftstoffabscheider 28A ist vorzugsweise dazu ausgebildet, Kraftstoff und Wasser voneinander zu trennen und/oder Wasser bzw. Kraftstoff abzuscheiden.

Vorzugsweise ist der mittels des Wasserabscheiders 28A abgeschiedene Kraftstoff der Kraftstoffrückleitung 15 bzw. den Kraftstofftank 8 zuführbar bzw. ist das mittels des Wasserabscheiders 28A abgeschiedene Wasser über eine entsprechende Wasserrückleitung dem Wassertank 17 zuführbar.

Vorzugsweise weist der Verbrennungsmotor 1 bzw. das Einspritzsystem 2 mindestens einen Drucksensor 29, 30 auf und/oder ist mindestens ein Drucksensor 29, 30 in die Kraftstoffzuleitung 13, Wasserzuleitung 21, im Kraftstoff-Druckspeicher 6 und/oder Wasser-Druckspeicher 7 integriert, vorzugsweise um den Kraftstoffdruck K und/oder den Wasserdruck W zu messen.

Vorzugsweise weist der Verbrennungsmotor 1 bzw. das Einspritzsystem 2 einen Kraftstoffdrucksensor 29 und einen Wasserdrucksensor 30 auf, insbesondere wobei der Kraftstoffdrucksensor 29 im Kraftstoff-Druckspeicher 26 angeordnet oder an diesem angeschlossen ist und/oder dazu ausgebildet ist, den Kraftstoffdruck K im Kraftstoff-Druckspeicher 6 zu messen.

Vorzugsweise ist der Wasserdrucksensor 30 im Wasser-Druckspeicher 7 angeordnet oder an diesem angeschlossen und/oder dazu ausgebildet, den Wasserdruck W im Wasser-Druckspeicher 7 zu messen.

Vorzugsweise weist der Verbrennungsmotor 1 bzw. das Einspritzsystem 2 ein erstes Steuergerät 31 auf, vorzugsweise wobei das erste Steuergerät 31 dazu ausgebildet ist, die Kraftstoffeinspritzung bzw. -zufuhr in den Kraftstoff-Druckspeicher 6 und/oder Injektor 5 bzw. Brennraum B, insbesondere die Kraftstoffmenge, den Kraftstoffdruck K, den Zeitpunkt der Kraftstoffeinspritzung und/oder die Dauer der Kraftstoffeinspritzung, zu steuern bzw. zu regeln, vorzugsweise in Abhängigkeit von mindestens einem Betriebsparameter und/oder einem Motorbetrieb, besonders bevorzugt in Abhängigkeit von der Motorlast M, Drehzahl N, Kühlwassertemperatur T, Fahrpedalstellung F, dem Kraftstoffdruck K im Kraftstoff-Druckspeicher 6 und/oder sonstigen Parametern.

Besonders bevorzugt ist das erste Steuergerät 31 dazu ausgebildet, die notwendige bzw. optimale Einspritzmenge und/oder Einspritzdauer und/oder den notwendigen bzw. optimalen Einspritzzeitpunkt und/oder Einspritzdruck des Kraftstoffes zu bestimmen bzw. errechnen, vorzugsweise in Abhängigkeit von mindestens einem Betriebsparameter.

Insbesondere ist das erste Steuergerät 31 dazu ausgebildet, den Injektor 5, die Kraftstoffvordruckpumpe 9, die Kraftstoffhochdruckpumpe 12, das Kraftstoffdruckregelventil 14 und/oder das Steuerventil 25A in der Kraftstoffleitung 25 anzusteuern.

Vorzugsweise weist der Verbrennungsmotor 1 bzw. das Einspritzsystem 2 ein zweites Steuergerät 32 auf, vorzugsweise wobei das zweite Steuergerät 32 dazu ausgebildet ist, die Wassereinspritzung bzw. -zufuhr in den Wasser-Druckspeicher 7 und/oder Injektor 5 bzw. Brennraum B, insbesondere die Wassermenge, den Wasserdruck W, den Zeitpunkt der Wasserzufuhr und/oder die Dauer der Wasserzufuhr, und/oder die Zusammensetzung der Wasser-Kraftstoff-Emulsion bzw. den Wasseranteil in der Wasser-Kraftstoff-Emulsion zu steuern bzw. zu regeln, vorzugsweise in Abhängigkeit von mindestens einem Betriebsparameter und/oder einem Motorbetrieb, besonders bevorzugt in Abhängigkeit von der Motorlast M, Drehzahl N, Kühlwassertemperatur T, Fahrpedalstellung F, dem Kraftstoffdruck K, dem Wasserdruck W und/oder sonstigen Parametern.

Vorzugsweise ist das zweite Steuergerät 32 dazu ausgebildet, die notwendige bzw. optimale Einspritzmenge und/oder Einspritzdauer und/oder den notwendigen bzw. optimalen Einspritzzeitpunkt und/oder Einspritzdruck von Wasser in den Wasser-Druckspeicher 7 und/oder Injektor 5 bzw. Brennraum B zu bestimmen bzw. errechnen und/oder das Emulgiersystem 3, den Injektor 5, die Wasservordruckpumpe 18, Wasserhochdruckpumpe 20, das Steuerventil 26A in der Wasserleitung 26, das Steuerventil 27A in der Spülleitung 27, das Rückgewinnungssystem 24, insbesondere die Drossel 24A und/oder den Kühler 24B, und/oder das Wasserdruckregelventil 22 am Wasser-Druckspeicher 7 anzusteuern, vorzugsweise in Abhängigkeit von mindestens einem Betriebsparameter und/oder einem Motorbetrieb, insbesondere in Abhängigkeit von der Motorlast M, Drehzahl N, Kühlwassertemperatur T, Fahrpedalstellung F, dem Kraftstoffdruck K, dem Wasserdruck W und/oder sonstigen Parametern.

Vorzugsweise ist der Wasseranteil der Wasser-Kraftstoff-Emulsion in Abhängigkeit von mindestens einem Betriebsparameter und/oder vom Motorbetriebspunkt veränderbar bzw. variierbar und/oder anpassbar, vorzugsweise mittels des zweiten Steuergeräts 32.

Ganz besonders bevorzugt ist das zweite Steuergerät 32 dazu ausgebildet, den Wasserdruck W im Wasser-Druckspeicher 7 in Abhängigkeit vom Kraftstoffdruck K im Kraftstoff-Druckspeicher 6 und/oder an den Kraftstoffdruck K anzupassen bzw. die Differenz zwischen dem Wasserdruck W und dem Kraftstoffdruck K zumindest im Wesentlichen konstant zu halten bzw. Schwankungen der Druckdifferenz zwischen dem Wasserdruck W und dem Kraftstoffdruck K auszugleichen und/oder zu minimieren, vorzugsweise durch Ansteuern der Wasserhochdruckpumpe 20 und/oder des Wasserdruckregelventils 22.

Bei der dargestellten Ausführungsform weist der vorschlagsgemäße Verbrennungsmotor 1 bzw. das Einspritzsystem 2 zwei Steuergeräte 31, 32 auf. Es sind jedoch auch konstruktive Lösungen möglich, bei denen der Verbrennungsmotor 1 bzw. das Einspritzsystem 2 lediglich ein Steuergerät 31 bzw. 32 aufweist und/oder eines der Steuergeräte 31 oder 32 ein, mehrere oder alle Merkmale des anderen der Steuergeräte 31 bzw. 32 aufweist. Insbesondere kann das erste Steuergerät 31 grundsätzlich wie das zweite Steuergerät 32 ausgebildet sein oder umgekehrt. Vorzugsweise ist das erste Steuergerät 31 bzw. zweite Steuergerät 32 elektrisch mit dem Einspritzsystem 2, dem Emulgiersystem 3, der Emulgiervorrichtung 4, dem Injektor 5, der Kraftstoffvordruckpumpe 9, dem Kraftstoffzähler 11 in der Kraftstoffzuleitung 13, der Kraftstoffhochdruckpumpe 12, dem Kraftstoffdruckregelventil 14, dem Kraftstoffzähler 16 in der Kraftstoffrückleitung 15, der Wasservordruckpumpe 18, der Wasserhochdruckpumpe 20, dem Wasserdruckregelventil 22, dem Rückgewinnungssystem 24, dem Steuerventil 25A in der Kraftstoffleitung 25, dem Steuerventil 26A in der Wasserleitung 26, dem Steuerventil 27A in der Spülleitung 27, dem Kraftstoffdrucksensor 29 und/oder dem Wasserdrucksensor 30 verbunden oder verbindbar.

Optional ist das erste Steuergerät 31 mit dem zweiten Steuergerät 32 verbunden und/oder in dieses integriert oder umgekehrt.

In Fig. 1 sind die entsprechenden, bevorzugten und/oder optionalen Signalverbindungen, Steuerleitungen o. dgl. des ersten Steuergeräts 31 bzw. zweiten Steuergeräts 32 mit den entsprechenden Komponenten gestrichelt dargestellt.

Wie eingangs bereits erläutert, weist der Verbrennungsmotor 1 bzw. das Einspritzsystem 2 vorzugsweise mehrere Emulgiersysteme 3 bzw. Emulgiervorrichtungen 4 bzw. Injektoren 5 auf.

Vorzugsweise sind die Emulgiersysteme 3 bzw. Emulgiervorrichtungen 4 bzw. Injektoren 5 parallel an die Kraftstoffzuleitung 13, des Kraftstoff-Druckspeicher 6, den Wasser-Druckspeicher 7 und/oder die Wasserzuleitung 21 angeschlossen und/oder parallel mit Kraftstoff und/oder Wasser versorgt bzw. versorgbar.

Bei der dargestellten Ausführungsform ist vorzugsweise jedem Zylinder bzw. Injektor 5 eine separate bzw. eigene Emulgiervorrichtung 4 zugeordnet.

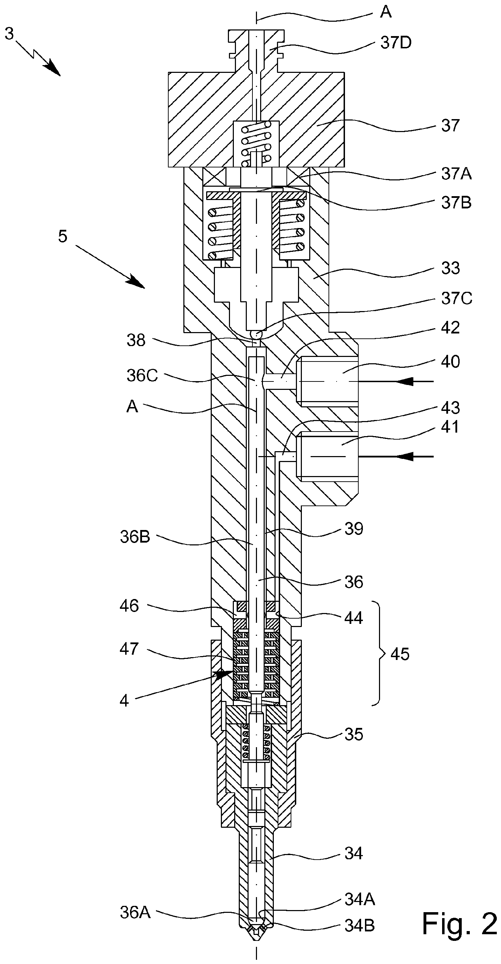

Fig. 2 zeigt in einem schematischen Längsschnitt das vorschlagsgemäße Emulgiersystem 3 mit der vorschlagsgemäßen Emulgiervorrichtung 4 und dem vorschlagsgemäßen Injektor 5.

Das Emulgiersystem 3 bzw. der Injektor 5 weist vorzugsweise einen Düsen- bzw. Ventilkörper 33 und einen Düsen- bzw. Ventilkopf 34 auf, vorzugsweise wobei der Düsenkopf 34 form-, kraft- und/oder stoffschlüssig, hier mittels einer Überwurfmutter 35, mit dem Düsenkörper 33 verbunden oder verbindbar ist.

Der Düsenkopf 34 ist vorzugsweise auf einer dem Brennraum B (in Fig. 2 nicht dargestellt) zugewandten Seite des Emulgiersystems 3 bzw. Injektors 5 angeordnet. Besonders bevorzugt ragt das Emulgiersystem 3, insbesondere der Injektor 5 bzw. der Düsenkopf 34, im Einbauzustand zumindest teilweise in den zugeordneten Brennraum B hinein.

Insbesondere ist der Düsenkopf 34 als Auslass für den Kraftstoff bzw. die Wasser-Kraftstoff-Emulsion ausgebildet und/oder dazu ausgebildet, den Kraftstoff bzw. die Wasser-Kraftstoff-Emulsion in den zugeordneten Brennraum B zu leiten.

Das Emulgiersystem 3 bzw. der Injektor 5 weist ein bewegbares Düsenelement bzw. eine bewegbare Düsennadel 36 auf, vorzugsweise wobei die Düsennadel 36 axial bzw. entlang einer Längsachse A des Emulgiersystems 3 bzw. Injektors 5 bewegbar ist, vorzugsweise um Kraftstoff bzw. die Wasser-Kraftstoff-Emulsion in den Brennraum B einzuspritzen bzw. den Einspritzvorgang in den Brennraum B zu unterbrechen.

Insbesondere ist durch eine Hubbewegung der Düsennadel 36 das Emulgiersystem 3 bzw. der Injektor 5 öffenbar bzw. schließbar und/oder Kraftstoff und/oder Wasser bzw. die Wasser-Kraftstoff-Emulsion in den Brennraum B einspritzbar.

Das Düsenelement bzw. die Düsennadel 36 ist vorzugsweise länglich bzw. nadelförmig ausgebildet. Hier sind jedoch auch andere Lösungen möglich.

Vorzugsweise bildet die Düsennadel 36 eine vormontierte Baueinheit bzw. ist die Düsennadel 36 einstückig ausgebildet.

Die Düsennadel 36 weist vorzugsweise eine Düsennadelspitze 36A, ein Mittelstück 36B und/oder einen Steuerkolben 36C auf, vorzugsweise wobei das Mittelstück 36B die Düsennadelspitze 36A mit dem Steuerkolben 36C verbindet.

Das Emulgiersystem 3 bzw. der Injektor 5, insbesondere der Düsenkopf 34, weist vorzugsweise einen Ventilsitz 34A, insbesondere für die Düsennadel 36, besonders bevorzugt für die Düsennadelspitze 36A, und/oder mindestens einen Einspritz- bzw. Auslasskanal 34B auf, vorzugsweise wobei Kraftstoff und/oder Wasser, insbesondere Kraftstoff und Wasser zusammen bzw. die in der Emulgiervorrichtung 4 erzeugte Wasser-Kraftstoff-Emulsion, über den Auslasskanal 34B dem Brennraum B zuführbar ist.

Vorzugsweise erstreckt sich die Düsennadel 36 durch die Emulgiervorrichtung 4, insbesondere bis zum Auslass des Injektors 5 bzw. Ventilsitz 34A.

Im dargestellten Zustand ist das Emulgiersystem 3 bzw. der Injektor 5 geschlossen bzw. ist die Düsennadel 36, insbesondere die Düsennadelspitze 36A, gegen den Düsenkopf 34, insbesondere den Ventilsitz 34A, gedrückt, vorzugsweise derart, dass der Auslasskanal 34B verschlossen ist.

Das Emulgiersystem 3 weist vorzugsweise eine Steuereinrichtung 37 auf, vorzugsweise wobei die Steuereinrichtung 37 dazu ausgebildet ist, den Injektor 5 bzw. die Düsennadel 36, insbesondere den Steuerkolben 36C, - vorzugsweise berührungslos - zu betätigen bzw. axial zu bewegen, insbesondere hydraulisch oder mechanisch.

Bei der dargestellten Ausführungsform ist der Injektor 5 bzw. die Düsennadel 36 vorzugsweise hydraulisch, insbesondere mittels des Kraftstoffdrucks K, betätigbar.

Besonders bevorzugt ist die Steuereinrichtung 37 als insbesondere piezoelektrischer oder elektromagnetischer Aktor ausgebildet oder weist einen solchen auf. Hier sind jedoch auch andere Lösungen möglich.

Vorzugsweise ist die Steuereinrichtung 37 elektrisch mit dem ersten Steuergerät 31 und/oder zweiten Steuergerät 32 verbunden und/oder mittels des ersten Steuergeräts 31 und/oder zweiten Steuergeräts 32 ansteuerbar.

Die Steuereinrichtung 37 ist vorzugsweise auf einer dem Brennraum B abgewandten Seite bzw. an einem dem Brennraum B abgewandten axialen Ende des Injektors 5 bzw. Düsenkörpers 33 angeordnet und/oder an diesem befestigt.

Vorzugsweise weist die Steuereinrichtung 37 einen (elektrischen) Steueranschluss (nicht dargestellt), einen beispielsweise elektromagnetischen oder piezoelektrischen Aktor, hier mit einem Elektromagneten 37A und einem Anker 37B, ein Steuerventil 37C, einen Rücklauf bzw. Rücklaufstutzen 37D und/oder einen Steuerkanal 38 auf.

Vorzugsweise ist der Steuerkanal 38 mittels des Aktors wahlweise öffenbar oder schließbar, besonders bevorzugt um den (axialen) Druck auf die Düsennadel 36 bzw. den Steuerkolben 36C wahlweise zu verringern oder zu erhöhen und/oder um die Düsennadel 36 im Düsenkörper 33 zu bewegen bzw. den Auslasskanal 34B wahlweise zu öffnen oder zu schließen.

Insbesondere ist der Aktor dazu ausgebildet, einen Kraftstofffluss durch den Steuerkanal 38 zum Rücklauf 37D zu ermöglichen oder zu verhindern, insbesondere um den Injektor 5 zu betätigen bzw. einen Einspritzvorgang zu initiieren oder zu beenden.

Vorzugsweise ist der Rücklauf 37D fluidisch mit dem Kraftstofftank 8, der Kraftstoffrückleitung 15 und/oder dem Wassertank 17 verbunden oder verbindbar, wie eingangs bereits erläutert.

Das Emulgiersystem 3 bzw. der Injektor 5 weist vorzugsweise eine Längsbohrung bzw. einen vorzugsweise länglichen, insbesondere durch mehrere Bohrungsabschnitte mit unterschiedlichen Durchmessern gebildeten Druckraum 39 auf, vorzugsweise wobei die Düsennadel 36 im Druckraum 39 angeordnet bzw. - zumindest abschnittsweise - geführt ist und/oder - zumindest abschnittsweise - umströmt wird.

Vorzugsweise ist der Druckraum 39 dazu ausgebildet, Kraftstoff, Wasser bzw. die Wasser-Kraftstoff-Emulsion zum Auslass bzw. Düsenkopf 34 bzw. Auslasskanal 34B zu leiten.

Vorzugsweise ist das Emulgiersystem 3 bzw. der Injektor 5 zumindest im Wesentlichen axial durchströmbar, vorzugsweise mittels Kraftstoff und/oder Wasser. Insbesondere verläuft die Hauptströmungsrichtung des Kraftstoffs und/oder des Wassers im Emulgiersystem 3 bzw. Injektor 5, insbesondere im Druckraum 39, zumindest im Wesentlichen axial bzw. entlang der Längsachse A des Injektors 5.

Das Emulgiersystem 3 bzw. der Injektor 5 weist vorzugsweise einen Einlass auf. Besonders bevorzugt weist das Emulgiersystem 3 bzw. der Injektor 5 einen Kraftstoffeinlass 40 und einen Wassereinlass 41 auf, vorzugsweise wobei Kraftstoff über den Kraftstoffeinlass 40 und/oder Wasser über den Wassereinlass 41 dem Emulgiersystem 3 bzw. der Emulgiervorrichtung 4 bzw. dem Injektor 5 zuführbar sind/ist, insbesondere getrennt voneinander. Es sind jedoch auch konstruktive Lösungen möglich, denen das Emulgiersystem 3 bzw. die Emulgiervorrichtung 4 bzw. der Injektor 5 einen gemeinsamen Einlass für Kraftstoff und Wasser aufweist und/oder Wasser und Kraftstoff zusammen über einen gemeinsamen Einlass dem Emulgiersystem 3 bzw. der Emulgiervorrichtung 4 bzw. dem Injektor 5 zuführbar sind.

Vorzugsweise weist das Emulgiersystem 3 bzw. der Injektor 5 einen Kraftstoffeinlasskanal 42 und einen Wassereinlasskanal 43 auf.

Vorzugsweise ist der Kraftstoffeinlass 40 über den Kraftstoffeinlasskanal 42 mit dem Druckraum 39 fluidisch verbunden. Insbesondere ist Kraftstoff über den Kraftstoffeinlass 40 bzw. den Kraftstoffeinlasskanal 42 dem Druckraum 39 zuführbar.

Vorzugsweise ist der Wassereinlass 41 über den Wassereinlasskanal 43 mit dem Druckraum 39 bzw. der Emulgiervorrichtung 4 fluidisch verbunden. Insbesondere ist Wasser über den Wassereinlass 41 bzw. Wassereinlasskanal 43 dem Druckraum 39 bzw. der Emulgiervorrichtung 4 zuführbar.

Bei der dargestellten Ausführungsform sind der Kraftstoffeinlass 40 und der Wassereinlass 41 vorzugsweise seitlich am Injektor 5 bzw. Düsenkörper 33 angeordnet. Hier sind jedoch auch andere Lösungen möglich.

Vorzugsweise bilden die Emulgiervorrichtung 4 und der Injektor 5 zusammen eine feste bzw. starre Baugruppe bzw. Baueinheit.

Insbesondere ist die Emulgiervorrichtung 4 in den Injektor 5 integriert und/oder zumindest teilweise innerhalb des Injektors 5 angeordnet oder durch den Injektor 5 gebildet.

Bei der dargestellten Ausführungsform ist die Emulgiervorrichtung 4 vollständig innerhalb des Injektors 5 bzw. des Düsenkörpers 33 angeordnet oder von diesem umgeben.

Vorzugsweise ist die Emulgiervorrichtung 4 form-, kraft- und/oder stoffschlüssig, mit dem Injektor 5, insbesondere dem Düsenkörper 33, verbunden.

Vorzugsweise weist der Injektor 5 bzw. der Düsenkörper 33 eine Aufnahme 44 zur Aufnahme der Emulgiervorrichtung 4 auf. Besonders bevorzugt ist die Emulgiervorrichtung 4 in den Injektor 5 bzw. Düsenkörper 33, insbesondere die Aufnahme 44, eingesetzt oder eingeschraubt.

Bei der dargestellten Ausführungsform ist die Emulgiervorrichtung 4 vorzugsweise als separates Bauteil zum Injektor 5 ausgebildet bzw. aus dem Injektor 5 herausnehmbar. Es sind jedoch auch konstruktive Lösungen möglich, bei denen die Emulgiervorrichtung 4 und der Injektor 5 einstückig ausgebildet sind.

In einer besonders bevorzugten Variante ist die Emulgiervorrichtung 4 bzw. das Gehäuse dieser fest mit einem Gehäuse bzw. dem Düsenkörper 33 des Injektors 5 verbunden oder einstückig hiermit gebildet (nicht dargestellt).

Vorzugsweise ist die Emulgiervorrichtung 4 innerhalb des Druckraums 39 angeordnet bzw. schließt sich die Emulgiervorrichtung 4 unmittelbar an den Druckraum 39 an und/oder ist die Emulgiervorrichtung 4 unmittelbar vor dem Düsenkopf 34 bzw. dem Auslasskanal 34B angeordnet.

Insbesondere ist die Emulgiervorrichtung 4 in der unteren bzw. dem Brennraum B zugewandten Hälfte des Injektors 5 angeordnet.

Es sind jedoch auch konstruktive Lösungen möglich, bei denen die Emulgiervorrichtung 4 in einem Einlass des Injektors 5 angeordnet ist.

Das Emulgiersystem 3 bzw. die Emulgiervorrichtung 4 bzw. der Injektor 5 weist vorzugsweise einen Emulgierraum bzw. einen Emulgierbereich 45 auf oder bildet einen solchen.

Vorzugsweise wird die Emulgiervorrichtung 4 bzw. der Emulgierraum 45 zumindest im Wesentlichen axial bzw. entlang der Längsachse A durchströmt.

Vorzugsweise ist die Emulgiervorrichtung 4 bzw. der Emulgierraum 45 näher am Auslass als am Kraftstoffeinlass 40, Wassereinlass 41 und/oder Rücklauf 37D angeordnet. In vorteilhafter Weise erfolgt so die Erzeugung der Wasser-Kraftstoff-Emulsion unmittelbar bzw. kurz vor der Einspritzung dieser in den zugeordneten Brennraum B.

Ganz besonders bevorzugt beträgt der kleinste Abstand zwischen der Emulgiervorrichtung 4 und dem Auslasskanal 34B bzw. dem dem Brennraum B zugewandten axialen Ende des Injektors 5 weniger als 200 mm oder 150 mm, vorzugsweise weniger als 100 mm oder 80 mm, und/oder mehr als 10 mm oder 20 mm, vorzugsweise mehr als 30 mm oder 40 mm.

Die Emulgiervorrichtung 4 ist vorzugsweise dazu ausgebildet, Wasser seitlich bzw. quer zur Hauptströmungsrichtung des Kraftstoffs bzw. quer zur Längsachse A dem Kraftstoff bzw. Druckraum 39 bzw. Emulgierraum 45 zuzuführen.

Besonders bevorzugt mündet der Wassereinlasskanal 43 quer bzw. seitlich in den Druckraum 39 bzw. Emulgierraum 45. In vorteilhafter Weise wird so bereits bei der Zuführung des Wassers eine - vorzugsweise turbulente - Mischung von Wasser und Kraftstoff erzielt.

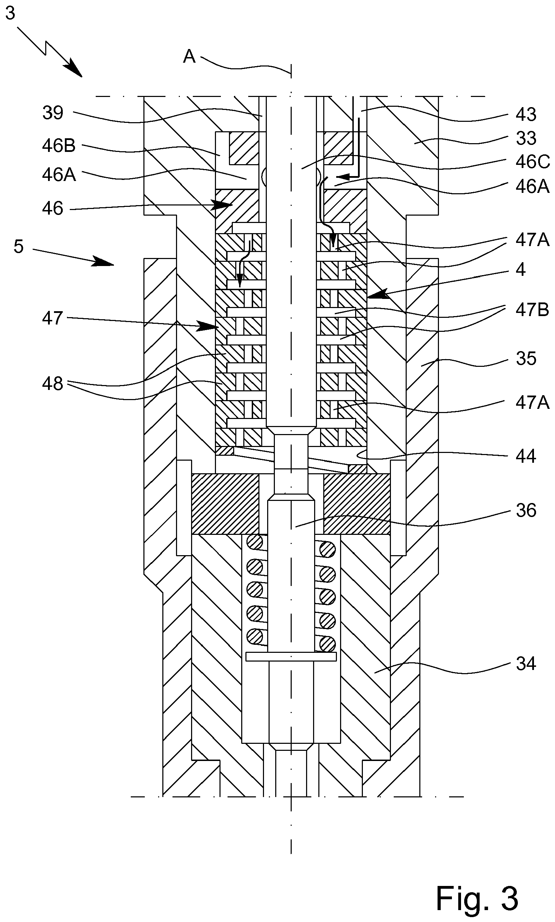

Fig. 3 zeigt in einem schematischen Schnitt das Emulgiersystem 3 im Bereich der Emulgiervorrichtung 4.

Die Emulgiervorrichtung 4 ist vorzugsweise statisch, starr bzw. zumindest im Wesentlichen unbeweglich. Insbesondere weist die Emulgiervorrichtung 4 keine beweglichen Elemente bzw. Bauteile auf. Dies ermöglicht eine einfache, stabile und kompakte Bauweise.

Besonders bevorzugt weist das Emulgiersystem 3 einen vorzugsweise statischen Mischer zum Mischen des Kraftstoffes mit Wasser auf bzw. ist die Emulgiervorrichtung 4 als vorzugsweise statischer Mischer zum Mischen des Kraftstoffes mit Wasser ausgebildet.

Vorzugsweise ist die Emulgiervorrichtung 4 mehrstufig, insbesondere zweistufig, ausgebildet und/oder weist die Emulgiervorrichtung 4 eine Voremulgierstufe 46 und eine Feinemulgierstufe 47 auf, vorzugsweise wobei die Voremulgierstufe 46 und/oder die Feinemulgierstufe 47 den Emulgierraum 45 aufweisen/aufweist oder bilden/bildet.

Vorzugsweise ist die Voremulgierstufe 46 dazu ausgebildet, Wasser und Kraftstoff zusammenzuführen.

Insbesondere ist die Voremulgierstufe 46 dazu ausgebildet, Wasser seitlich bzw. zumindest im Wesentlichen orthogonal zur Hauptströmungsrichtung des Kraftstoffes dem Kraftstoff zuzuführen bzw. in den Druckraum 39 bzw. den Emulgierraum 45 zu leiten.

Insbesondere mündet der Wassereinlasskanal 43 in den Druckraum 39 bzw. Emulgierraum 45 innerhalb der Voremulgierstufe 46.

Die Emulgiervorrichtung 4, insbesondere die Voremulgierstufe 46, weist vorzugsweise mindestens eine, besonders bevorzugt mehrere Zuführkanäle bzw. -bohrungen 46A, mindestens einen vorzugsweise umlaufenden Verteilkanal bzw. Verteilraum 46B und/oder eine Emulgierkammer 46C auf.

Vorzugsweise verbinden die Zuführkanäle 46A den Druckraum 39 bzw. Emulgierraum 45 bzw. die Emulgierkammer 46C fluidisch mit dem Wassereinlasskanal 43 bzw. Wassereinlass 41.

Die Zuführkanäle 46A sind vorzugsweise radial um den Druckraum 39 bzw. Emulgierraum 45 bzw. die Emulgierkammer 46C verteilt, besonders bevorzugt in einer gemeinsamen Ebene.

Ganz besonders bevorzugt sind die Zuführkanäle 46A zumindest im Wesentlichen orthogonal zur Längsachse A ausgerichtet und/oder dazu ausgebildet, Wasser seitlich dem Druckraum 39 bzw. Emulgierraum 45 bzw. der Emulgierkammer 46C zuzuführen.

Der Verteilkanal bzw. Verteilraum 46B ist vorzugsweise dazu ausgebildet, die Zuführkanäle 46A fluidisch mit dem Wassereinlasskanal 43 zu verbinden und/oder Wasser - zumindest im Wesentlichen - gleichmäßig über die Zuführkanäle 46A zu verteilen, vorzugsweise derart, dass Wasser von allen Seiten dem Druckraum 39 bzw. Emulgierraum 45 bzw. der Emulgierkammer 46C über die Zuführkanäle 46A zugeführt werden kann.

Vorzugsweise ist die Emulgierkammer 46C dazu ausgebildet, Kraftstoff und Wasser zu vermischen bzw. vorzuemulgieren.

Besonders bevorzugt ist die Emulgierkammer 46C im Emulgierraum 45 angeordnet oder bildet diesen oder umgekehrt.

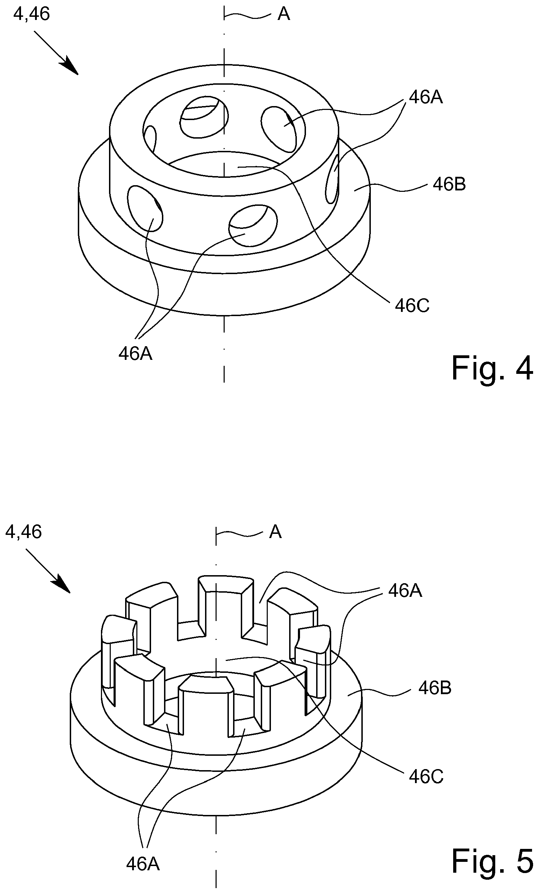

Fig. 4 zeigt die Emulgiervorrichtung 4 bzw. die Voremulgierstufe 46 gemäß Fig. 3 in einer perspektivischen Ansicht. Fig. 5 zeigt eine alternative Ausführungsform der Emulgiervorrichtung 4 bzw. Voremulgierstufe 46 in einer perspektivischen Ansicht.

Bei der in Fig. 5 dargestellten Ausführungsform sind die Zuführkanäle 46B vorzugsweise als zumindest im Wesentlichen rechteckige Durchbrüche ausgebildet, insbesondere wobei die Zuführkanäle 46A axial bzw. entgegen der Hauptströmungsrichtung offen ausgebildet sind. In vorteilhafter Weise wird so die Bauhöhe der Emulgiervorrichtung 4 bzw. Voremulgierstufe 46 verringert.

Die Feinemulgierstufe 47 schließt sich vorzugsweise stromabwärts der Voremulgierstufe 46, insbesondere der Emulgierkammer 46C, an, vorzugsweise unmittelbar.

Die Emulgiervorrichtung 4, insbesondere die Feinemulgierstufe 47, weist vorzugsweise mindestens einen Emulgierkanal 47A und/oder mindestens eine Emulgierkammer 47B auf.

Der Emulgierkanal 47A ist vorzugsweise dazu ausgebildet, den Druckraum 39 bzw. die Voremulgierstufe 46, insbesondere die Emulgierkammer 46B, fluidisch mit der Emulgierkammer 47B zu verbinden und/oder Wasser bzw. Kraftstoff bzw. die (voremulgierte) Wasser-Kraftstoff-Emulsion in die Emulgierkammer 47B und/oder zum Auslasskanal 34B zu leiten.

Vorzugsweise schließt sich die Emulgierkammer 47B dem Emulgierkanal 47A an bzw. ist die Emulgierkammer 47B stromabwärts zum Emulgierkanal 47A angeordnet oder umgekehrt.

Vorzugsweise ist der Strömungsquerschnitt des Emulgierkanals 47A kleiner als der Strömungsquerschnitt der Emulgierkammer 47B.

Insbesondere ist der Emulgierkanal 47A dazu ausgebildet, die Strömung bzw. Wasser-Kraftstoff-Emulsion zu beschleunigen.

Insbesondere ist die Emulgierkammer 47B dazu ausgebildet, die Strömung bzw. die Wasser-Kraftstoff-Emulsion zu verzögern.

Ganz besonders bevorzugt ist die Emulgierkammer 47B dazu ausgebildet, Wasser und Kraftstoff bzw. die Wasser-Kraftstoff-Emulsion zu verwirbeln und/oder die Turbulenz der Wasser-Kraftstoff-Emulsion zu erhöhen. In vorteilhafter Weise wird so eine besonders homogene Wasser-Kraftstoff-Emulsion und/oder eine kleine mittlere Tröpfchengröße des Wassers im Kraftstoff erreicht.

Vorzugsweise weist die Emulgiervorrichtung 4, insbesondere die Feinemulgierstufe 47, mehrere Emulgierkanäle 47A und/oder mehrere Emulgierkammern 47B auf, vorzugsweise wobei die Emulgierkammern 47B in Strömungsrichtung hintereinander angeordnet bzw. nacheinander durchströmbar und/oder über zugeordnete Emulgierkanäle 47A fluidisch miteinander verbunden sind.

Ganz besonders bevorzugt sind mehrere Emulgierkanäle 47A jeweils einer Emulgierkammer 47B zugeordnet und/oder sind mehrere Emulgierkanäle 47A dazu ausgebildet, die Wasser-Kraftstoff-Emulsion in eine zugeordnete bzw. stromabwärts angeordnete Emulgierkammer 47B zu leiten.

Vorzugsweise variiert der Abstand der Emulgierkanäle 47A zur Längsachse A entlang der Längsachse A bzw. in Hauptströmungsrichtung Wasser-Kraftstoff-Emulsion.

Insbesondere sind die unmittelbar stromabwärts angeordneten Emulgierkanäle 47A seitlich bzw. radial zur Längsachse A versetzt zu den unmittelbar stromaufwärts angeordneten Emulgierkanälen 47A, wie insbesondere Fig. 3 veranschaulicht. Auf diese Weise wird eine besonders effiziente Vermischung bzw. Verwirbelung und eine damit einhergehende Vermischung von Kraftstoff und Wasser ermöglicht oder unterstützt. Es sind jedoch auch konstruktive Lösungen möglich, bei denen die in Hauptströmungsrichtung aufeinanderfolgenden Emulgierkanäle 47A koaxial zueinander angeordnet sind oder eine gemeinsame Längsachse aufweisen.

Vorzugsweise weist die Emulgiervorrichtung 4 mindestens ein Emulgierelement 48 auf, vorzugsweise wobei das Emulgierelement 48 den Emulgierkanal 47A und/oder die Emulgierkammer 47B aufweist oder bildet.

Bei der dargestellten Ausführungsform weist die Emulgiervorrichtung 4 mehrere Emulgierelemente 48 auf, wobei die Emulgierelemente 48 axial bzw. in Strömungsrichtung aneinander gereiht sind. Hier sind jedoch auch andere Lösungen möglich. Vorzugsweise sind die Emulgierelemente 48 platten- bzw. scheibenförmig ausgebildet und/oder lose miteinander verbunden.

Insbesondere ist die Feinemulgierstufe 47 durch mehrere, hier acht, vorzugsweise zumindest im Wesentlichen baugleiche Emulgierelemente 48 gebildet. Es sind jedoch auch konstruktive Lösungen möglich, bei denen die Feinemulgierstufe 47 eine Baueinheit bildet oder einstückig ausgebildet ist.

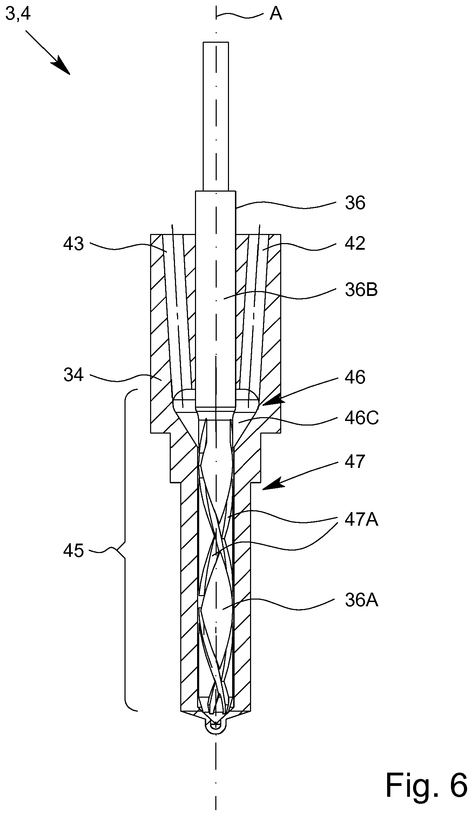

Fig. 6 zeigt das vorschlagsgemäße Emulgiersystem 3 bzw. die vorschlagsgemäße Emulgiervorrichtung 4 gemäß einer weiteren, besonders bevorzugten Ausführungsform.

Bei der dargestellten Ausführungsform weist das Emulgiersystem 3 bzw. die Emulgiervorrichtung 4 bzw. die Voremulgierstufe 46 eine vorzugsweise ringförmig ausgebildete Emulgierkammer 46C auf, vorzugsweise wobei sowohl der Kraftstoffeinlasskanal 42 als auch der Wassereinlasskanal 43 - vorzugsweise zumindest im Wesentlichen axial - in die Emulgierkammer 46C münden, insbesondere beabstandet zueinander.

Bei der dargestellten Ausführungsform sind der Kraftstoffeinlasskanal 42 und der Wassereinlasskanal 43 vorzugsweise relativ zur Längsachse A geneigt, vorzugsweise um einen Winkel von mehr als 1° oder 5°, insbesondere von mehr als 10° oder 15°, und/oder weniger als 90° oder 60°, insbesondere weniger als 45° oder 30°.

Die Emulgierkammer 46C ist vorzugsweise trichterförmig ausgebildet. Besonders bevorzugt verjüngt sich der Strömungsquerschnitt der Emulgierkammer 46C nach unten bzw. in Hauptströmungsrichtung bzw. in Richtung Brennraum B (in Fig. 6 nicht dargestellt).

Vorzugsweise erstreckt sich die Düsennadel 36 - insbesondere zumindest im Wesentlichen mittig - durch den Emulgierraum bzw. -bereich 45 bzw. die Emulgierkammer 46C hindurch. Insbesondere ist die Emulgierkammer 46C als Ringraum ausgebildet und/oder umgibt die Emulgierkammer 46C die Düsennadel 36 ringförmig.

Bei der in Fig. 6 dargestellten Ausführungsform sind/ist die Voremulgierstufe 46 und/oder Feinemulgierstufe 47 vorzugsweise durch den Düsenkopf 34 bzw. die Düsennadel 36, insbesondere die Düsennadelspitze 36A, gebildet.

Vorzugsweise weist der Injektor 5, insbesondere der Düsenkopf 34 und/oder die Düsennadel 36 bzw. Düsennadelspitze 36A, den Emulgierkanal 47A, insbesondere der Feinemulgierstufe 47, auf oder bildet diesen.

Der Emulgierkanal 47A ist vorzugsweise dazu ausgebildet, die Voremulgierstufe 46, insbesondere die Emulgierkammer 46C der Voremulgierstufe 46, mit dem Auslasskanal 34B fluidisch zu verbinden und/oder die - insbesondere in der Voremulgierstufe 46 voremulgierte - Wasser-Kraftstoff-Emulsion (weiter) zu emulgieren.

Der Emulgierkanal 47A ist vorzugsweise durch eine Aussparung bzw. Nut in der Düsennadel 36 und/oder im Düsenkörper 33 bzw. Düsenkopf 34 gebildet. Bei der dargestellten Ausführungsform weist die Düsennadel 36 bzw. Düsennadelspitze 36A den Emulgierkanal 47A auf oder bildet diesen. Es sind jedoch auch konstruktive Lösungen möglich, bei denen der Düsenkörper 33 bzw. der Düsenkopf 34 den Emulgierkanal 47A aufweist oder bildet, beispielsweise durch eine entsprechende Aussparung bzw. Nut auf einer der Düsennadel 36 zugewandten Seite des Düsenkörpers 33 bzw. des Düsenkopfes 34.

Der Emulgierkanal 47A verläuft vorzugsweise zumindest im Wesentlichen axial und/oder parallel zur Längsachse A.

Erfindungsgemäß ist der Emulgierkanal 47A schraubenlinienförmig und/oder als Schraubenlinie bzw. Spirale um die Düsennadel 36 bzw. Längsachse A ausgebildet.

Besonders bevorzugt windet sich der Emulgierkanal 47A mit konstanter Steigung um die Düsennadel 36 bzw. Düsennadelspitze 36A. Vorzugsweise beträgt die Steigung des Emulgierkanals 47A relativ zur Längsachse A bzw. der in einer Seitenansicht des Injektors 5 zwischen dem Emulgierkanal 47A und der Längsachse A eingeschlossene Winkel mehr als 5° oder 10°, insbesondere mehr als 15° oder 20°, und/oder weniger als 60° oder 45°, insbesondere weniger als 30° oder 25°.

Vorzugsweise windet sich der Emulgierkanal 47A mindestens einmal vollständig um die Düsennadel 36 bzw. die Längsachse A.

Die Feinemulgierstufe 47, insbesondere der Emulgierkanal 47A, ist vorzugsweise dazu ausgebildet, die Turbulenz in der Wasser-Kraftstoff-Emulsion und/oder die auf die Wasser-Kraftstoff-Emulsion wirkenden Scherkräfte zu erhöhen und/oder einen Drehimpuls auf die Strömung bzw. Wasser-Kraftstoff-Emulsion zu erzeugen.

Insbesondere verursacht der schraubenlinienförmige Emulgierkanal 47A einen Drall der Strömung bzw. der Wasser-Kraftstoff-Emulsion, insbesondere um die Längsachse A. Dies ermöglicht eine besonders gute Vermischung von Wasser und Kraftstoff bei gleichzeitig kompakter Bauweise des Emulgiersystems 3.

Vorzugsweise weist der Emulgierkanal 47A einen Strömungsquerschnitt von weniger als 4 mm² oder 3 mm² und/oder von mehr als 1 mm² oder 1,5 mm² auf.

Vorzugsweise ist der Emulgierkanal 47A mehr als 0,1 mm oder 0,3 mm, insbesondere mehr als 0,5 mm, und/oder weniger als 2 mm oder 1,5 mm tief.

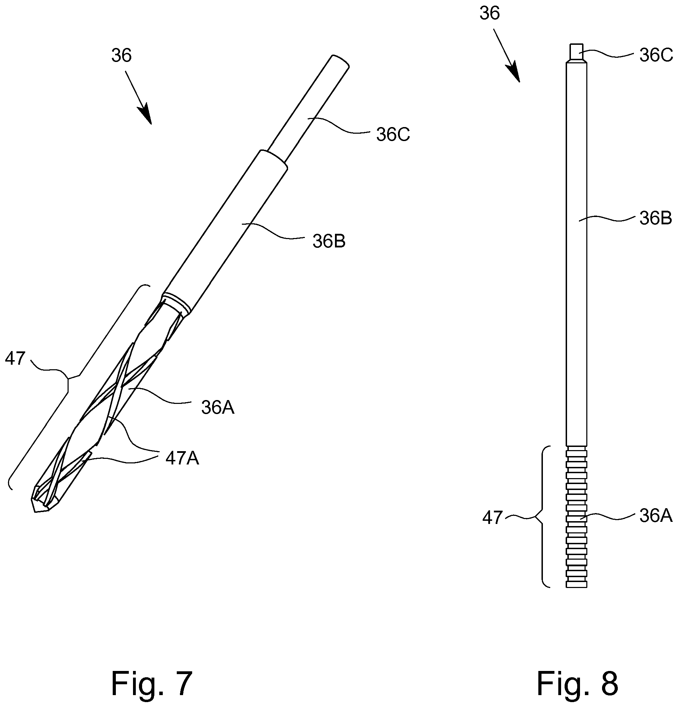

Das Einspritzsystem 2 bzw. das Emulgiersystem 3 bzw. die Emulgiervorrichtung 4, insbesondere die Feinemulgierstufe 47, weist vorzugsweise mehrere Emulgierkanäle 47A auf, wie in Fig. 6 und Fig. 7 dargestellt.

Vorzugsweise weisen die Emulgierkanäle 47A jeweils unterschiedliche Steigungen zur Längsachse A auf bzw. winden sich die Emulgierkanäle 47A mit jeweils unterschiedlicher Steigung um die Düsennadel 36.

Besonders bevorzugt kreuzen sich die Emulgierkanäle 47A mindestens einmal, vorzugsweise zweimal oder dreimal, auf der Oberfläche der Düsennadel 36. In vorteilhafter Weise wird so die Turbulenz der Strömung erhöht bzw. eine besonders gute Vermischung von Wasser und Kraftstoff erzielt.

Fig. 8 zeigt die Düsennadel 36 gemäß einer weiteren bzw. alternativen Ausführungsform.

Vorzugsweise weist die Düsennadel 36, insbesondere die Düsennadelspitze 36A, insbesondere im Bereich der Feinemulgierstufe 47 bzw. im Bereich, der im Emulgierraum 45 angeordnet ist, - vorzugsweise umlaufende - Erhöhungen und/oder Vertiefungen, wie Querrillen, auf, vorzugsweise wobei die Erhöhungen und/oder Vertiefungen quer zur Hauptströmungsrichtung bzw. Längsachse A verlaufen. In vorteilhafter Weise wird so die Turbulenz, insbesondere im Emulgierraum 45 bzw. in der Voremulgierstufe 46 und/oder Feinemulgierstufe 47, erhöht.

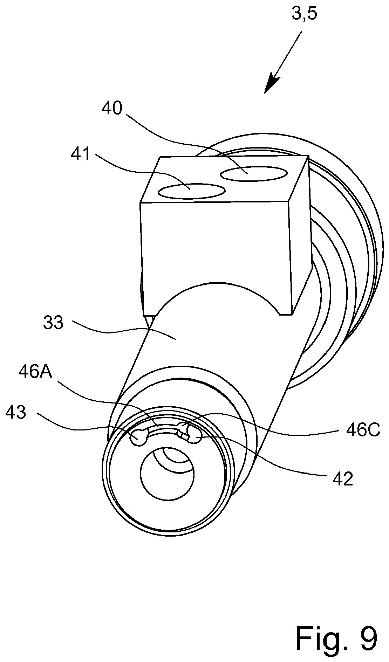

Fig. 9 zeigt das Emulgiersystem 3 bzw. die Emulgiervorrichtung 4 bzw. den Injektor 5 gemäß einer weiteren Ausführungsform.

Vorzugsweise ist die Emulgiervorrichtung 4, insbesondere die Voremulgierstufe 46, zumindest teilweise durch den Düsenkörper 33 gebildet.

Vorzugsweise weist der Injektor 5, insbesondere der Düsenkörper 33, den Zuführkanal 46A und/oder die Emulgierkammer 46C auf oder bildet diesen bzw. diese, vorzugsweise wobei der Zuführkanal 46A den Kraftstoffeinlasskanal 42 mit dem Wassereinlasskanal 43 fluidisch verbindet und/oder mittels des Zuführkanals 46A Wasser aus dem Wassereinlasskanal 43 in den Kraftstoffeinlasskanal 42 und/oder die Emulgierkammer 46C strömen kann.

Vorzugsweise schließt sich die Emulgierkammer 46C an den Kraftstoffeinlasskanal 42, Wassereinlasskanal 43 und/oder Zuführkanal 46A an und/oder ist die Emulgierkammer 46C unmittelbar stromaufwärts zur Feinemulgierstufe 47 angeordnet.

Besonders bevorzugt ist der Wassereinlasskanal 43 mittelbar bzw. über den Zuführkanal 46A mit der Emulgierkammer 46C und der Kraftstoffeinlasskanal 42 unmittelbar mit der Emulgierkammer 46C fluidisch verbunden.

Vorzugsweise verläuft der Zuführkanal 46A im Einbauzustand zumindest im Wesentlichen horizontal und/oder quer zur Längsachse A.

Insbesondere ist der Zuführkanal 46A dazu ausgebildet, Wasser und/oder Kraftstoff seitlich in die Emulgierkammer 46C zu leiten. Hier sind jedoch auch andere Lösungen möglich.

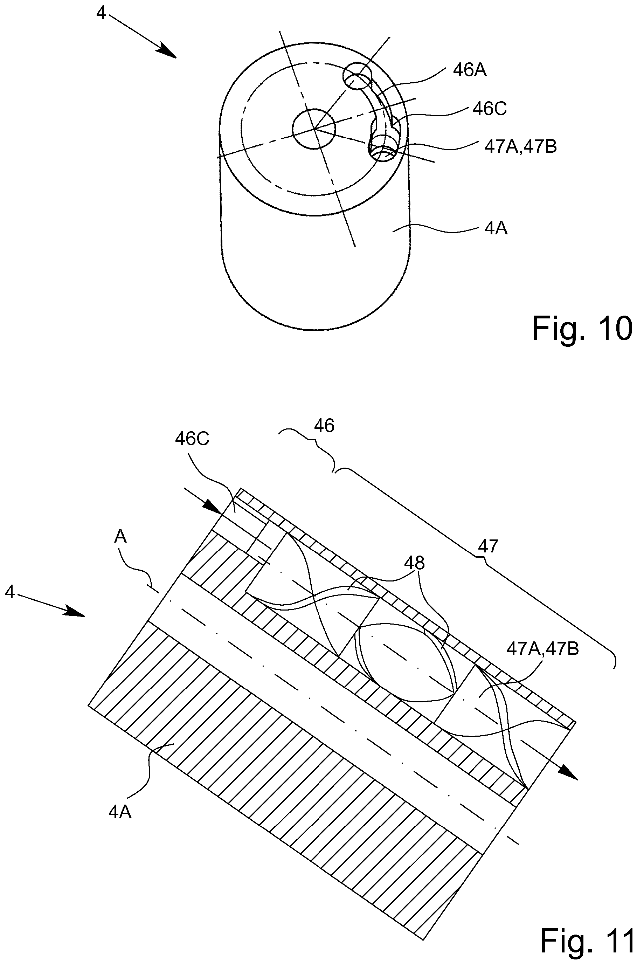

Vorzugsweise sind/ist der Zuführkanal 46A und/oder die Emulgierkammer 46C am axialen bzw. dem Düsenkopf 34 zugewandten Ende des Düsenkörpers 33 angeordnet. Hier sind jedoch auch andere Lösungen möglich, wie insbesondere Fig. 10 und 11 veranschaulichen.

Fig. 10 und 11 zeigen die Emulgiervorrichtung 4, insbesondere die Voremulgierstufe 46 und Feinemulgierstufe 47, gemäß einer weiteren Ausführungsform.

Bei der in Fig. 10 und Fig. 11 dargestellten Ausführungsform ist die Emulgiervorrichtung 4 vorzugsweise einstückig ausgebildet oder bildet eine Baueinheit. Insbesondere sind die Voremulgierstufe 46 und Feinemulgierstufe 47 in einem gemeinsamen Grundkörper 4A der Emulgiervorrichtung 4 angeordnet bzw. integriert.

Bei der dargestellten Ausführungsform ist die Emulgiervorrichtung 4 vorzugsweise als Zwischenstück ausgebildet, zwischen dem Düsenkörper 33 und dem Düsenkopf 34 angeordnet oder anordenbar und/oder dazu ausgebildet, den Düsenkörper 33 mit dem Düsenkopf 34 zu verbinden.

Vorzugsweise weist die Emulgiervorrichtung 4 an einem axialen bzw. dem Düsenkörper 33 zugewandten Ende den Zuführkanal 46A und/oder die Emulgierkammer 46C auf und/oder ist die Emulgiervorrichtung 4 dazu ausgebildet, den Kraftstoffeinlasskanal 42 fluidisch mit dem Wassereinlasskanal 43 zu verbinden, vorzugsweise mittels des Zuführkanals 46A und/oder der Emulgierkammer 46C.

Vorzugsweise schließt sich unmittelbar an die Emulgierkammer 46C die Feinemulgierstufe 47, insbesondere der Emulgierkanal 47A und/oder die Emulgierkammer 47B, an.

Bei der dargestellten Ausführungsform ist die Feinemulgierstufe 47 vorzugsweise durch die Emulgierkammer 47B und mindestens ein vorzugsweise in der Emulgierkammer 47B angeordnetes, vorzugsweise einsetzbares und/oder austauschbares, Emulgierelement 48 gebildet.

Besonders bevorzugt ist das Emulgierelement 48 als vorzugsweise statischer Mischereinsatz, beispielsweise als Metall- bzw. Drahtgeflecht, insbesondere aus Edelstahl, ausgebildet.

Vorzugsweise erstreckt sich die Feinemulgierstufe 47, insbesondere der Emulgierkanal 47A bzw. die Emulgierkammer 47B, zumindest im Wesentlichen parallel und/oder beabstandet zur Längsachse A und/oder der Düsennadel 36 (in Fig. 11 nicht dargestellt).

Vorzugsweise schließt sich der Feinemulgierstufe 47 der Düsenkopf 34 an und/oder ist die Wasser-Kraftstoff-Emulsion mittels der Feinemulgierstufe 47, insbesondere des Emulgierkanals 47A bzw. der Emulgierkammer 47B, unmittelbar bzw. direkt dem Auslasskanal 34B und/oder dem Druckraum 39 zuführbar.

Vorzugsweise ist die Emulgiervorrichtung 4 mittels der Überwurfmutter 35 (in Fig. 10 und 11 nicht dargestellt) zwischen dem Düsenkörper 33 und dem Düsenkopf 34 einklemmbar. In vorteilhafter Weise kann so ein Injektor 5 um die vorschlagsgemäße Emulgiervorrichtung 4 erweitert werden.

Nachfolgend wird das vorschlagsgemäße Emulgierverfahren zur Herstellung einer Wasser-Kraftstoff-Emulsion näher erläutert.

Vorzugsweise wird das vorschlagsgemäße Emulgierverfahren mittels des Verbrennungsmotors 1 bzw. des Einspritzsystems 2 bzw. des Emulgiersystems 3 bzw. der Emulgiervorrichtung 4 durchgeführt.

Der Kraftstoff wird vorzugsweise dem Kraftstofftank 8 entnommen, vorzugsweise mittels der Kraftstoffvordruckpumpe 9.

Vorzugsweise wird der Kraftstoff in einer Kraftstoffzuleitung 13 gefiltert, vorzugsweise mittels des Kraftstofffilters 10.

Vorzugsweise wird der Kraftstoff unter Druck gesetzt, vorzugsweise mittels Kraftstoffvordruckpumpe 9 bzw. der Kraftstoffhochdruckpumpe 12, und dem (gemeinsamen) Kraftstoff-Druckspeicher 6 zugeführt.

Der Kraftstoffdruck K im Kraftstoff-Druckspeicher 6 und/oder im Emulgiersystem 4 bzw. in der Emulgiervorrichtung 4 beträgt - zumindest zeitweise bzw. je nach Motorlast - vorzugsweise mehr als 50 MPa, 100 MPa oder 150 MPa, besonders bevorzugt mehr als 180 MPa oder 200 MPa, insbesondere mehr als 220 MPa.

Das Wasser wird vorzugsweise dem Wassertank 17 entnommen, vorzugsweise mittels der Wasservordruckpumpe 18.

Vorzugsweise wird das Wasser gefiltert bzw. gereinigt, vorzugsweise mittels des Wasserfilters 19.

Vorzugsweise wird das Wasser unter Druck gesetzt, vorzugsweise mittels der Wasservordruckpumpe 18 und/oder der Wasserhochdruckpumpe 20 und dem Wasser-Druckspeicher 7 zugeführt.

Der Wasserdruck W im Wasser-Druckspeicher 7 und/oder im Emulgiersystem 4 bzw. in der Emulgiervorrichtung 4 beträgt - zumindest zeitweise bzw. je nach Motorlast - vorzugsweise mehr als 50 MPa, 100 MPa oder 150 MPa, besonders bevorzugt mehr als 180 MPa oder 200 MPa, insbesondere mehr als 220 MPa.

Vorzugsweise werden der Kraftstoff und das Wasser gleichermaßen unter Druck gesetzt bzw. ist der Kraftstoffdruck K unmittelbar vor dem Emulgiersystem 3 bzw. der Emulgiervorrichtung 4 bzw. im Kraftstoffeinlass 40 genauso groß wie oder (geringfügig) größer als der Wasserdruck W unmittelbar vor dem Emulgiersystem 3 bzw. der Emulgiervorrichtung 4 bzw. im Wassereinlass 41.

Insbesondere werden/wird der Kraftstoffdruck K im Kraftstoff-Druckspeicher 6 und/oder der Wasserdruck W im Wasser-Druckspeicher 7 geregelt bzw. gesteuert, vorzugsweise mittels des ersten Steuergeräts 31 und/oder zweiten Steuergeräts 32, insbesondere durch Ansteuern der Kraftstoffvordruckpumpe 9, der Kraftstoffhochdruckpumpe 12, des Kraftstoffdruckregelventils 14, der Wasservordruckpumpe 18, Wasserhochdruckpumpe 20, des Steuerventils 26A in der Wasserleitung 26 und/oder des Wasserdruckregelventils 22.

Ganz besonders bevorzugt wird der Wasserdruck W an den Kraftstoffdruck K bzw. die Druckdifferenz zwischen dem Wasserdruck W und dem Kraftstoffdruck K angepasst bzw. werden Schwankungen der Druckdifferenz zwischen dem Wasserdruck W und dem Kraftstoffdruck K ausgeglichen bzw. minimiert, vorzugsweise mittels des zweiten Steuergeräts 32 und/oder durch Ansteuern der Wasserhochdruckpumpe 20 und/oder des Wasserdruckregelventils 22.

Bei einer besonders bevorzugten Ausführungsform wird der Wasserdruck W im Wasser-Druckspeicher 7 auf ein Grunddruckniveau erhöht, vorzugsweise wobei das Grunddruckniveau zumindest im Wesentlichen konstant ist und/oder dem Grunddruckniveau des Kraftstoffdrucks K im Kraftstoff-Druckspeicher 6 entspricht.

Vorzugsweise wird für jeden Einspritzvorgang, bei dem zusätzlich zum Kraftstoff auch Wasser dem Brennraum B zugeführt werden soll, bzw. zur Erzeugung einer Wasser-Kraftstoff-Emulsion eine definierte Menge bzw. ein definiertes Volumen von Wasser dem Wasser-Druckspeicher 7 zugeführt bzw. der Wasserdruck W im Wasserdruck-Speicher 7 zumindest temporär bzw. für den jeweiligen Einspritzvorgang erhöht, vorzugsweise jeweils um die Menge bzw. das Volumen bzw. den Druck, die bzw. das bzw. der zur Erzeugung der - auf den vorliegenden Motorbetriebspunkt optimierten - Wasser-Kraftstoff-Emulsion und/oder zur Anpassung des Wasseranteils in der Wasser-Kraftstoff-Emulsion notwendig ist.

Vorzugsweise wird bzw. werden die Wasserzufuhr zum Wasser-Druckspeicher 7 und/oder Injektor 5 bzw. zur Emulgiervorrichtung 4, insbesondere die Menge bzw. das Volumen des Wassers, der Wasserdruck W, der Zeitpunkt und/oder die Dauer der Wasserzufuhr, in Abhängigkeit von mindestens einem Betriebsparameter, insbesondere der Motorlast M, Drehzahl N, Kühlwassertemperatur T, Fahrpedalstellung F, dem Kraftstoffdruck K und/oder sonstigen Betriebsparametern, verändert oder angepasst, vorzugsweise mittels des ersten Steuergeräts 31 und/oder des zweiten Steuergeräts 32 und/oder durch Ansteuern der Wasservordruckpumpe 18, Wasserhochdruckpumpe 20, des Steuerventils 26A in der Wasserleitung 26 und/oder eines Wasserdruckregelventils 22 in der Wasserrückleitung und/oder im Wasser-Druckspeicher 7.

Besonders bevorzugt wird bzw. werden das Steuerventil 26A der Wasserleitung 26, insbesondere der Öffnungszeitpunkt, die Öffnungsdauer, der Schließzeitpunkt und/oder die Schließdauer des Steuerventils 26A, gesteuert bzw. an mindestens einen Betriebsparameter angepasst, vorzugsweise mittels des ersten Steuergeräts 31 und/oder zweiten Steuergeräts 32, insbesondere um die Wasserzufuhr, wie die Menge bzw. das Volumen des Wassers, den Zeitpunkt und/oder die Dauer der Wasserzufuhr, zur Emulgiervorrichtung 4 bzw. zum Injektor 5 einzustellen.

Vorzugsweise werden das Wasser und der Kraftstoff nach der Druckbeaufschlagung des Wassers und des Kraftstoffes dem Emulgiersystem 3 bzw. der Emulgiervorrichtung 4 bzw. dem Injektor 5 zugeführt, vorzugsweise getrennt voneinander, insbesondere über den Kraftstoffeinlass 40 bzw. Wassereinlass 41.

Besonders bevorzugt wird Kraftstoff aus dem Kraftstoff-Druckspeicher 6 über den Kraftstoffeinlass 40 und Wasser aus dem Wasser-Druckspeicher 7 über den Wassereinlass 41 dem Emulgiersystem 3 bzw. der Emulgiervorrichtung 4 bzw. dem Injektor 5 zugeführt.

Alternativ ist es jedoch auch möglich, dass Wasser und Kraftstoff zusammen bzw. gemeinsam bzw. über eine gemeinsame Leitung dem Emulgiersystem 3 bzw. der Emulgiervorrichtung 4 zugeführt werden.

Vorzugsweise werden Wasser und Kraftstoff - erst bzw. ausschließlich - im Injektor 5 emulgiert bzw. wird die Wasser-Kraftstoff-Emulsion - erst bzw. ausschließlich - im Injektor 5 erzeugt und/oder homogenisiert.

Insbesondere wird der Kraftstoff und Wasser innerhalb des Injektors 5 bzw. mittels der im Injektor 5 integrierten Emulgiervorrichtung 4 gemischt bzw. emulgiert.

Vorzugsweise wird Wasser dem Kraftstoff im Injektor 5 zugemischt, insbesondere um (anschließend) Wasser und Kraftstoff zusammen als Gemisch bzw. Wasser-Kraftstoff-Emulsion dem Brennraum B zuzuführen, insbesondere über den Auslasskanal 34B.

Vorzugsweise wird Wasser seitlich bzw. quer zur Hauptströmungsrichtung des Kraftstoffes im Injektor 5 dem Kraftstoff bzw. dem Druckraum 39 bzw. Emulgierraum 45 bzw. der Emulgierkammer 46C zugeführt, vorzugsweise in einem statischen Mischer bzw. in der Voremulgierstufe 46 der Emulgiervorrichtung 4.

Vorzugsweise wird bzw. werden die Emulgiervorrichtung 4, insbesondere die Feinemulgierstufe 47 bzw. die Emulgierkanäle 47A und/oder Emulgierkammern 47B, zumindest im Wesentlichen axial von der - vorzugsweise voremulgierten - Wasser-Kraftstoff-Emulsion durchströmt.

Vorzugsweise wird die Wasser-Kraftstoff-Emulsion im Injektor 5 zerstäubt bzw. vernebelt und/oder derart emulgiert, dass die mittlere Wassertröpfchengröße weniger als 1 µm beträgt.

Vorzugsweise wird die Wasser-Kraftstoff-Emulsion mittels des Injektors 5 einem zugeordneten Zylinder zugeführt bzw. in einen zugeordneten Brennraum B eingespritzt, vorzugsweise über einen oder mehrere vorzugsweise gemeinsame Auslasskanäle 34B.

Vorzugsweise beträgt die Reaktionszeit bzw. die Zeit zur Anpassung der Emulsionszusammensetzung bzw. des Wasseranteils in der Wasser-Kraftstoff-Emulsion an veränderte Betriebsbedingungen weniger als 1000 ms oder 800 ms, besonders bevorzugt weniger als 700 ms oder 600 ms, insbesondere weniger als 400 ms oder 300 ms, und/oder mehr als 10 ms oder 50 ms, besonders bevorzugt mehr als 80 ms oder 100 ms.

Optional wird das Emulgiersystem 3, insbesondere die Emulgiervorrichtung 4 und/oder der Injektor 5, - zumindest teilweise und/oder bei Bedarf - mit (reinem) Kraftstoff gespült.

Insbesondere wird die Wasserleitung 26, der Wassereinlass 41 und/oder der Wassereinlasskanal 43 zumindest teilweise mit Kraftstoff gespült, insbesondere vor, während und/oder nach Abschaltung des Verbrennungsmotors 1, vorzugsweise durch Öffnen des Steuerventils 27A in der Steuerleitung 27, insbesondere mittels des ersten Steuergeräts 31 und/oder zweiten Steuergeräts 32. In vorteilhafter Weise wird so die Gefahr einer Korrosion des Emulgiersystems 3, der Emulgiervorrichtung 4 und/oder des Injektors 5, insbesondere der Wasserleitung 26, des Wassereinlass 41 und/oder des Wassereinlasskanals 43, vermieden oder reduziert.

Vorzugsweise wird das herausgespülte Wasser bzw. die herausgespülte Wasser-Kraftstoff-Emulsion wiederverwendet und/oder der Rücklaufleitung 28 bzw. dem Wasserabscheider 28A zugeführt.

Vorzugsweise wird die Spülung der Emulgiervorrichtung 4 bzw. des Injektors 5 mit Kraftstoff und/oder die Entfernung von Resten der Wasser-Kraftstoff-Emulsion in der Emulgiervorrichtung 4 bzw. im Injektor 5 in weniger als 3 s oder 2 s, besonders bevorzugt weniger als 1,5 s oder 1 s, und/oder innerhalb von weniger als 20 Arbeitszyklen oder 10 Arbeitszyklen, besonders bevorzugt weniger als 8 Arbeitszyklen, des Verbrennungsmotors 1 bei einer Leerlaufdrehzahl von weniger als 1000 1/min oder 900 1/min und/oder mehr als 500 1/min oder 600 1/min durchgeführt.

Einzelne Aspekte und Merkmale der vorliegenden Erfindung sowie einzelne Verfahrensschritte können unabhängig voneinander, aber auch in beliebiger Kombination und/oder Reihenfolge realisiert werden.

**Bezugszeichenliste:**

| | | | |
|---|---|---|---|
| 1 | Verbrennungsmotor | 30 | Wasserdrucksensor |
| 2 | Einspritzsystem | 31 | erstes Steuergerät |
| 3 | Emulgiersystem | 32 | zweites Steuergerät |
| 4 | Emulgiervorrichtung | 33 | Ventilkörper / Düsenkörper |
| 4A | Grundkörper | 34 | Ventilkopf / Düsenkopf |
| 5 | Injektor | 34A | Ventilsitz |
| 6 | Kraftstoff-Druckspeicher | 34B | Auslasskanal |
| 7 | Wasser-Druckspeicher | 35 | Überwurfmutter |
| 8 | Kraftstofftank | 36 | Düsennadel |
| 9 | Kraftstoffvordruckpumpe | 36A | Düsennadelspitze |
| 10 | Kraftstofffilter | 36B | Mittelstück |
| 11 | Kraftstoffzähler | 36C | Steuerkolben |
| 12 | Kraftstoffhochdruckpumpe | 37 | Steuereinrichtung |
| 13 | Kraftstoffzuleitung | 37A | Elektromagnet |
| 14 | Kraftstoffdruckregelventil | 37B | Anker |
| 15 | Kraftstoffrückleitung | 37C | Steuerventil |
| 16 | Kraftstoffzähler | 37D | Rücklaufstutzen |
| 17 | Wassertank | | |
| 18 | Wasservordruckpumpe | 38 | Steuerkanal |
| 19 | Wasserfilter | 39 | Druckraum |
| 20 | Wasserhochdruckpumpe | 40 | Kraftstoffeinlass |
| 21 | Wasserzuleitung | 41 | Wassereinlass |
| 22 | Wasserdruckregelventil | 42 | Kraftstoffeinlasskanal |
| 23 | Abgasleitung | 43 | Wassereinlasskanal |
| 24 | Rückgewinnungssystem | 44 | Aufnahme |
| 24A | Drossel | 45 | Emulgierraum |
| 24B | Kühler | 46 | Voremulgierstufe |
| 24C | Drucksensor | 46A | Zuführkanal |
| 24D | Feuchtesensor | 46B | Verteilkanal |
| 24E | Aufbereitung | 46C | Emulgierkammer |
| 25 | Kraftstoffleitung | 47 | Feinemulgierstufe |
| 25A | Steuerventil | 47A | Emulgierkanal |
| 25B | Rückschlagventil | 47B | Emulgierkammer |
| 26 | Wasserleitung | 48 | Emulgierelement |
| 26A | Steuerventil | A | Längsachse |
| 26B | Rückschlagventil | B | Brennraum |
| | | F | Fahrpedalstellung |
| 27 | Spülleitung | K | Kraftstoffdruck |
| 27A | Steuerventil | M | Motorlast |
| 28 | Rücklaufleitung | N | Drehzahl |
| 28A | Wasserabscheider | T | Kühlwassertemperatur |
| 29 | Kraftstoffdrucksensor | W | Wasserdruck |

## Patentansprüche

1. Emulgiersystem (3), insbesondere für einen Verbrennungsmotor (1),
wobei das Emulgiersystem (3) eine Emulgiervorrichtung (4) zur Herstellung einer Wasser-Kraftstoff-Emulsion und einen Injektor bzw. eine Einspritzdüse (5) zum Einspritzen der Wasser-Kraftstoff-Emulsion in einen Brennraum (B) aufweist,
wobei die Emulgiervorrichtung (4) in den Injektor bzw. die Einspritzdüse (5) integriert ist, wobei der Injektor bzw. die Einspritzdüse (5) eine bewegbare Düsennadel (36) aufweist,
**dadurch gekennzeichnet,**
**dass** das Emulgiersystem (3) mindestens einen um die Längsachse (A) der Düsennadel (36) schraubenlinienförmig verlaufenden Emulgierkanal (47A) aufweist.

2. Emulgiersystem nach Anspruch 1, **dadurch gekennzeichnet, dass** das Emulgiersystem (3) einen Kraftstoffeinlass (40) und einen - vorzugsweise vom Kraftstoffeinlass (40) separaten - Wassereinlass (41) aufweist.

3. Emulgiersystem nach Anspruch 1 oder 2, **dadurch gekennzeichnet, dass** der Injektor bzw. die Einspritzdüse (5) einen Druckraum (39) aufweist oder bildet, vorzugsweise wobei die Emulgiervorrichtung (4) im Druckraum (39) angeordnet und/oder fluidisch mit dem Druckraum (39) verbunden ist.

4. Emulgiersystem nach einem der voranstehenden Ansprüche, **dadurch gekennzeichnet, dass** sich die Düsennadel (36) durch die Emulgiervorrichtung (4) erstreckt.

5. Emulgiersystem nach einem der voranstehenden Ansprüche, **dadurch gekennzeichnet, dass** die Emulgiervorrichtung (4) mehrstufig, insbesondere zweistufig, ausgebildet ist und/oder eine Voremulgierstufe (46) und eine Feinemulgierstufe (47) aufweist.

6. Emulgiersystem nach einem der voranstehenden Ansprüche, **dadurch gekennzeichnet, dass** das Emulgiersystem (3), insbesondere die Emulgiervorrichtung (4), einen vorzugsweise statischen Mischer zum Mischen des Kraftstoffes mit Wasser aufweist oder bildet.

7. Emulgiersystem nach Anspruch 6, **dadurch gekennzeichnet, dass** die Emulgiervorrichtung (4), insbesondere der Mischer bzw. die Voremulgierstufe (46), dazu ausgebildet ist, Wasser - insbesondere seitlich bzw. quer zur Hauptströmungsrichtung des Kraftstoffes und/oder über den Umfang des Druckraums (39) und/oder eines Emulgierraums (45) verteilt - dem Kraftstoff zuzuführen.

8. Emulgiersystem nach einem der voranstehenden Ansprüche, **dadurch gekennzeichnet, dass** der Emulgierkanal (47A) in die Düsennadel (36) eingebracht ist und/oder dass das Emulgiersystem (3), insbesondere die Emulgiervorrichtung (4) und/oder der Injektor (5), mehrere um die Längsachse (A) der Düsennadel (36) schraubenlinienförmig verlaufende Emulgierkanäle (47A) aufweist, vorzugsweise wobei sich die Emulgierkanäle (47A) mindestens einmal, insbesondere zweimal oder dreimal, kreuzen, insbesondere auf der Düsennadel (36).

9. Emulgiersystem nach einem der voranstehenden Ansprüche, **dadurch gekennzeichnet, dass** der Injektor bzw. die Einspritzdüse (5) mindestens einen Auslasskanal (34B) für die Wasser-Kraftstoff-Emulsion aufweist, vorzugsweise wobei die Emulgiervorrichtung (4) näher am Auslasskanal (34B) als am Kraftstoffeinlass (40), Wassereinlass (41) und/oder einem dem Auslasskanal (34B) gegenüberliegenden Ende des Injektors bzw. der Einspritzdüse (5) angeordnet ist.

10. Einspritzsystem (2), insbesondere für einen Verbrennungsmotor (1),
wobei das Einspritzsystem (2) mehrere Emulgiersysteme (3) zur Herstellung einer Wasser-Kraftstoff-Emulsion, einen Kraftstoff-Druckspeicher (6) und/oder einen - vorzugsweise vom Kraftstoff-Druckspeicher (6) separaten - Wasser-Druckspeicher (7) aufweist,
wobei der Kraftstoff-Druckspeicher (6) und Wasser-Druckspeicher (7) mit allen Emulgiersystemen (3) fluidisch verbunden sind,
**dadurch gekennzeichnet,**
**dass** die Emulgiersysteme (3) nach einem der voranstehenden Ansprüche ausgebildet sind.

11. Emulgierverfahren zur Herstellung einer Wasser-Kraftstoff-Emulsion, insbesondere für einen Verbrennungsmotor (1), wobei Kraftstoff und Wasser mittels einer in einen Injektor bzw. eine Einspritzdüse (5) integrierten Emulgiervorrichtung (4) emulgiert werden, wobei der Injektor bzw. die Einspritzdüse (5) zum Einspritzen der Wasser-Kraftstoff-Emulsion in einen zugeordneten Brennraum (B) ausgebildet ist,
**dadurch gekennzeichnet,**
**dass** mittels mindestens eines schraubenlinienförmigen Emulgierkanals (47A) um eine Düsennadel (36) des Injektors (5) ein Drall in der Strömung erzeugt wird.

12. Emulgierverfahren nach Anspruch 11, **dadurch gekennzeichnet, dass** Kraftstoff in einem Kraftstoff-Druckspeicher (6) und Wasser in einem Wasser-Druckspeicher (7) unter Druck gesetzt und mindestens einem Injektor bzw. einer Einspritzdüse (5) zum Einspritzen des Kraftstoffs und des Wassers in einen zugeordneten Brennraum (B) separat zugeführt werden.

13. Emulgierverfahren nach Anspruch 11 oder 12, **dadurch gekennzeichnet, dass** das Wasser radial bzw. quer zur Hauptströmungsrichtung des Kraftstoffes im Injektor bzw. in der Einspritzdüse (5) dem Kraftstoff zugeführt wird, vorzugsweise in einer Voremulgierstufe (46) der Emulgiervorrichtung (4).

14. Emulgierverfahren nach einem der Ansprüche 11 bis 13, **dadurch gekennzeichnet, dass** dem Wasser-Druckspeicher (7) für jeden bzw. unmittelbar vor jedem Einspritzvorgang eine definierte Menge und/oder ein definiertes Volumen von Wasser zugeführt und/oder der Wasserdruck (W) im Wasser-Druckspeicher (7) zumindest temporär erhöht wird, vorzugsweise wobei die Menge bzw. das Volumen des zugeführten Wassers und/oder der Wasserdruck (W) im Wasser-Druckspeicher (7) in Abhängigkeit von mindestens einem Betriebsparameter verändert oder angepasst wird, insbesondere mittels einer Wasserhochdruckpumpe (20).

15. Emulgierverfahren nach einem der Ansprüche 11 bis 14, **dadurch gekennzeichnet, dass** die Wasserzufuhr zum Wasser-Druckspeicher (7) und/oder zur Emulgiervorrichtung (4) bzw. zum Injektor (5), insbesondere die Wassermenge, der Zeitpunkt der Wasserzufuhr und/oder die Dauer der Wasserzufuhr, und/oder der Wasserdruck (W) im Wasser-Druckspeicher (7) gesteuert wird, vorzugsweise durch ein Steuergerät (31, 32) und/oder durch Ansteuern einer Wasserhochdruckpumpe (20), eines Wasserdruckregelventils (22) und/oder eines Steuerventils (26A) in einer Wasserleitung (26).

## Claims

1. An emulsifying system (3), in particular for an internal combustion engine (1),
the emulsifying system (3) comprising an emulsifying device (4) for producing a water-fuel emulsion and an injector or an injection nozzle (5) for injecting the water-fuel emulsion into a combustion chamber (B),
the emulsifying device (4) being integrated into the injector or the injection nozzle (5), the injector or the injection nozzle (5) having a movable nozzle needle (36),
**characterised in that,**
the emulsifying system (3) has at least one emulsifying channel (47A) extending helically around the longitudinal axis (A) of the nozzle needle (36).

2. The emulsifying system according to claim 1, **characterised in that** the emulsifying system (3) has a fuel inlet (40) and a water inlet (41) preferably separate from the fuel inlet (40).

3. The emulsifying system according to claim 1 or 2, **characterised in that** the injector or the injection nozzle (5) has or forms a pressure chamber (39), the emulsifying device (4) preferably being arranged within the pressure chamber (39) and/or fluidically connected to the pressure chamber (39).

4. The emulsifying system according to one of the preceding claims, **characterised in that** the nozzle needle (36) extends through the emulsifying device (4).

5. The emulsifying system according to one of the preceding claims, **characterised in that** the emulsifying device (4) is designed to be multi-stage, in particular two-stage, and/or comprises a pre-emulsification stage (46) and a fine-emulsification stage (47).

6. The emulsifying system according to one of the preceding claims, **characterised in that** the emulsifying system (3), in particular the emulsifying device (4), has or forms a preferably static mixer for mixing the fuel with water.

7. The emulsifying system according to claim 6, **characterised in that** the emulsifying device (4), in particular the mixer and/or the pre-emulsification stage (46), is designed to supply water to the fuel, in particular distributed laterally/transversely to the main flow direction of the fuel and/or over the circumference of the pressure chamber (39) and/or an emulsifying chamber (45).

8. The emulsifying system according to one of the preceding claims, **characterised in that** the emulsifying channel (47A) is inserted into the nozzle needle (36) and/or **in that** the emulsifying system (3), in particular the emulsifying device (4) and/or the injector (5), comprises a plurality of emulsifying channels (47A) extending helically around the longitudinal axis (A) of the nozzle needle (36), the emulsifying channels (47A) preferably intersecting at least once, in particular twice or three times, in particular on the nozzle needle (36).

9. The emulsifying system according to one of the preceding claims, **characterised in that** the injector or the injection nozzle (5) comprises at least one outlet channel (34B) for the water-fuel emulsion, the emulsifying device (4) preferably being arranged to be closer to the outlet channel (34B) than to the fuel inlet (40), water inlet (41) and/or an end of the injector or injection nozzle (5) opposite the outlet channel (34B).

10. An injection system (2), in particular for an internal combustion engine (1),
the injection system (2) having a plurality of emulsifying systems (3) for producing a water-fuel emulsion, a fuel pressure accumulator (6) and/or a water pressure accumulator (7), preferably separate from the fuel pressure accumulator (6),
the fuel pressure accumulator (6) and water pressure accumulator (7) being fluidically connected to all emulsifying systems (3),
**characterised in that,**
the emulsifying systems (3) are designed according to one of the preceding claims.

11. An emulsifying method for producing a water-fuel emulsion, in particular for an internal combustion engine (1), fuel and water being emulsified by means of an emulsifying device (4) integrated into an injector or an injection nozzle (5), the injector or the injection nozzle (5) being designed for injecting the water-fuel emulsion into an associated combustion chamber (B),
**characterised in that,**
a swirl is generated in the flow by means of at least one helical emulsifying channel (47A) around a nozzle needle (36) of the injector (5).

12. The emulsifying method according to claim 11, **characterised in that** fuel is pressurised in a fuel pressure accumulator (6) and water is pressurised in a water pressure accumulator (7) and are supplied separately to at least one injector or one injection nozzle (5) for injecting the fuel and the water into an associated combustion chamber (B).

13. The emulsifying method according to claim 11 or 12, **characterised in that** the water is supplied to the fuel radially/transversely to the main flow direction of the fuel in the injector or in the injection nozzle (5), preferably in a pre-emulsification stage (46) of the emulsifying device (4).

14. The emulsifying method according to one of claims 11 to 13, **characterised in that** for each injection process and/or immediately before each injection process, a defined amount and/or a defined volume of water is supplied to the water pressure accumulator (7) and/or the water pressure (W) is at least temporarily increased in the water pressure accumulator (7), the amount and/or the volume of the supplied water and/or the water pressure (W) in the water pressure accumulator (7) preferably being changed or adjusted depending on at least one operating parameter, in particular by means of a high-pressure water pump (20).

15. The emulsifying method according to one of claims 11 to 14, **characterised in that** the water supply to the water pressure accumulator (7) and/or to the emulsifying device (4) and/or to the injector (5), in particular the amount of water, the timing of the water supply and/or the duration of the water supply, and/or the water pressure (W) in the water pressure accumulator (7) is controlled, preferably by a control unit (31, 32) and/or by actuating a high-pressure water pump (20), a water pressure control valve (22) and/or a control valve (26A) in a water line (26).

## Revendications

1. Système d'émulsification (3), en particulier pour moteur à combustion interne (1),
dans lequel le système d'émulsification (3) comprend un dispositif d'émulsification (4) pour produire une émulsion eau-carburant et un injecteur ou gicleur d'injection (5) pour injecter l'émulsion eau-carburant dans une chambre de combustion (B),
dans lequel le dispositif d'émulsification (4) est intégré dans l'injecteur ou le gicleur d'injection (5), l'injecteur ou le gicleur d'injection (5) comportant une aiguille d'injection mobile (36),
**caractérisé en ce que**
le système d'émulsification (3) présente au moins un canal d'émulsification (47A) s'étendant en hélice autour de l'axe longitudinal (A) de l'aiguille d'injection (36).

2. Système d'émulsification selon la revendication 1, **caractérisé en ce que** le système d'émulsification (3) présente une entrée de carburant (40) et une entrée d'eau (41) - de préférence séparée de l'entrée de carburant (40).

3. Système d'émulsification selon la revendication 1 ou 2, **caractérisé en ce que** l'injecteur ou gicleur d'injection (5) présente ou forme une chambre de pression (39), de préférence dans lequel le dispositif d'émulsification (4) est disposé dans la chambre de pression (39) et/ou relié de manière fluidique à la chambre de pression (39).

4. Système d'émulsification selon l'une des revendications précédentes, **caractérisé en ce que** l'aiguille d'injection (36) traverse le dispositif d'émulsification (4).

5. Système d'émulsification selon l'une des revendications précédentes, **caractérisé en ce que** le dispositif d'émulsification (4) est à plusieurs étages, en particulier à deux étages et/ou comporte une partie d'émulsification préalable (46) et une partie d'émulsification fine (47).

6. Système d'émulsification selon l'une des revendications précédentes, **caractérisé en ce que** le système d'émulsification (3), en particulier le dispositif d'émulsifi-cation (4), comporte ou forme un mélangeur de préférence statique pour mélanger le carburant avec de l'eau.

7. Système d'émulsification selon la revendication 6, **caractérisé en ce que** le dispositif d'émulsification (4), en particulier le mélangeur et/ou la partie d'émulsification préalable (46), est adapté pour alimenter l'eau au carburant, en particulier répartie latéralement/transversalement par rapport au sens d'écoulement principal du carburant et/ou sur le pourtour de la chambre de pression (39) et/ou une chambre d'émulsification (45).

8. Système d'émulsification selon l'une des revendications précédentes, **caractérisé en ce que** le canal d'émulsification (47A) est introduit dans l'aiguille d'injection (36) et/ou **en ce que** le système d'émulsification (3), en particulier le dispositif d'émulsification (4) et/ou l'injecteur (5), comporte plusieurs canaux d'émulsification (47A) s'étendant en hélice autour de l'axe longitudinal (A) de l'aiguille d'injection (36), de préférence dans lequel les canaux d'émulsification (47A) se croisent au moins une fois, en particulier deux ou trois fois, en particulier sur l'aiguille d'injection (36).

9. Système d'émulsification selon l'une des revendications précédentes, **caractérisé en ce que** l'injecteur ou gicleur d'injection (5) présente au moins un canal de sortie (34B) pour l'émulsion eau-carburant, de préférence dans lequel le dispositif d'émulsification (4) est plus proche du canal de sortie (34B) que de l'entrée de carburant (40), l'entrée d'eau (41) et/ou une extrémité de l'injecteur ou gicleur d'injection (5) opposée au canal de sortie (34B).

10. Système d'injection (2), en particulier pour moteur à combustion interne (1),
le système d'injection (2) ayant une pluralité de systèmes d'émulsification (3) pour produire une émulsion eau-carburant, un accumulateur de pression de carburant (6) et/ou un accumulateur de pression d'eau (7), de préférence séparé de l'accumulateur de pression de carburant (6),
l'accumulateur de pression de carburant (6) et l'accumulateur de pression d'eau (7) sont reliés de manière fluidique à tous les systèmes d'émulsification (3),
**caractérisé en ce que**
le système d'émulsification (3) est conçu conformément à une des revendications précédentes.

11. Procédé d'émulsification pour la fabrication d'une émulsion eau-carburant, en particulier pour un moteur à combustion interne (1), dans lequel le carburant et l'eau sont émulsionnés au moyen d'un dispositif d'émulsification (4) intégré dans un injecteur ou gicleur d'injection (5), l'injecteur ou gicleur d'injection (5) étant conçu pour injecter l'émulsion eau-carburant dans une chambre de combustion associée (B),
**caractérisé en ce que**
un tourbillon est généré dans l'écoulement au moyen d'au moins un canal d'émulsification hélicoïdal (47A) autour d'une aiguille d'injection (36) de l'injecteur (5).

12. Procédé d'émulsification selon la revendication 11, **caractérisé en ce que** le carburant est mis sous pression dans un accumulateur de pression de carburant (6) et l'eau dans un accumulateur de pression d'eau (7) et ils sont introduits séparément dans au moins un injecteur ou gicleur d'injection (5) servant à injecter le carburant et l'eau dans une chambre de combustion associée (B).

13. Procédé d'émulsification selon la revendication 11 ou 12, **caractérisé en ce que** l'eau est alimentée radialement/transversalement par rapport au sens principal d'écoulement du carburant dans l'injecteur ou gicleur d'injection (5), de préférence dans une partie d'émulsification préalable (46) du dispositif d'émulsification (4).

14. Procédé d'émulsification selon l'une des revendications 11 à 13, **caractérisé en ce que** pour chaque opération et/ou juste avant chaque opération d'injection, l'accumulateur de pression d'eau (7) est alimenté d'une quantité définie et/ou un volume défini d'eau et/ou la pression d'eau (W) dans l'accumulateur de pression d'eau (7) est au moins temporairement augmentée, de préférence dans lequel la quantité et/ou le volume de l'eau fournie et/ou la pression de l'eau (W) dans l'accumulateur de pression de l'eau (7) est modifié(e) ou ajusté(e) en fonction d'au moins un paramètre de fonctionnement, notamment au moyen d'une pompe à eau haute pression (20).

15. Procédé d'émulsification selon l'une des revendications 11 à 14, **caractérisé en ce que** l'alimentation en eau de l'accumulateur de pression d'eau (7) et/ou du dispositif d'émulsification (4) et/ou de l'injecteur (5), en particulier la quantité d'eau, le temps d'alimentation en eau et/ou la durée de l'alimentation en eau et/ou la pression d'eau (W) dans l'accumulateur de pression d'eau (7) est contrôlée, de préférence par une unité de commande (31, 32) et/ou par l'entraînement d'une pompe à eau haute pression (20), d'une soupape de régulation de pression d'eau (22) et/ou une soupape de commande (26A) dans une conduite d'eau (26).
